# EUROPÄISCHE PATENTSCHRIFT

(11) **EP 3 354 365 B1**
(45) Veröffentlichungstag und Bekanntmachung des Hinweises auf die Patenterteilung: **13.02.2019**
(21) Anmeldenummer: 18151841.6
(22) Anmeldetag: 16.01.2018
(51) Int. Cl.: B21F 27/04, E01F 7/04, B21F 23/00

(54) **DRAHTGEFLECHT UND VERFAHREN ZUR HERSTELLUNG EINER WENDEL FÜR EIN DRAHTGEFLECHT**
WIRE MESH AND METHOD FOR THE PRODUCTION OF A SINGLE-COIL FILAMENT FOR A WIRE MESH
TREILLIS MÉTALLIQUE ET PROCÉDÉ DE FABRICATION D'UN FILAMENT SPIRALÉ POUR UN TREILLIS MÉTALLIQUE

(30) Priorität: 30.01.2017 DE 102017101754
(43) Veröffentlichungstag der Anmeldung: 01.08.2018
(73) Patentinhaber: Geobrugg AG, 8590 Romanshorn (CH)
(72) Erfinder: WENDELER-GÖGGELMANN, Corinna, 9100 Herisau (CH)
(74) Vertreter: Daub, Thomas

(56) Entgegenhaltungen:
- WO-A1-99/43894
- CH-A2- 703 929
- DE-A1- 3 028 019
- DE-U1- 29 913 016
- US-A- 3 570 291
- US-A- 4 491 003

## Beschreibung

### Stand der Technik

Die Erfindung betrifft ein Drahtgeflecht nach dem Oberbegriff des Anspruchs 1 und ein Verfahren zur Herstellung einer Wendel für ein Drahtgeflecht nach dem Oberbegriff des Anspruchs 10.

Aus der CH 703 929 A2 sind Drahtgeflechte mit ineinandergeflochtenen Drahtwendeln bekannt, von denen wenigstens eine Drahtwendel aus einem Einzeldraht gebogen ist, und wobei die Drahtwendel jeweils einen ersten Schenkel, einen zweiten Schenkel sowie eine den ersten Schenkel und den zweiten Schenkel miteinander verbindende Biegestelle umfasst. Derartige Drahtwendeln werden mittels wiederholten Biegens eines Drahts in eine Biegerichtung hergestellt und weisen einen spiralartigen Verlauf auf. Das Biegen erfolgt mittels eines Biegetisches, der den Draht um einen Biegedorn biegt. Dabei wird der Draht mittels geeigneter Zuführrollen, welche den Draht entlang seiner Längsseiten führen, dem Biegedorn schräg zugeführt.

Die Aufgabe der Erfindung besteht insbesondere darin, ein gattungsgemäßes Drahtgeflecht mit vorteilhaften Eigenschaften hinsichtlich einer Belastbarkeit bereitzustellen. Die Aufgabe wird erfindungsgemäß durch die Merkmale der Patentansprüche 1 und 10 gelöst, während vorteilhafte Ausgestaltungen und Weiterbildungen der Erfindung den Unteransprüchen entnommen werden können.

### Vorteile der Erfindung

Die Erfindung geht aus von einem Drahtgeflecht, insbesondere einem Sicherheitsnetz, mit mehreren ineinander geflochtenen Wendeln, von denen wenigstens eine Wendel aus zumindest einem Einzeldraht, einem Drahtbündel, einer Drahtlitze, einem Drahtseil und/oder einem anderen Längselement mit zumindest einem, insbesondere einen hochfesten Stahl aufweisenden, Draht gebogen ist und zumindest einen ersten Schenkel, zumindest einen zweiten Schenkel sowie zumindest eine den ersten Schenkel und den zweiten Schenkel miteinander verbindende Biegestelle umfasst.

Es wird vorgeschlagen, dass das Längselement, insbesondere der Draht, entlang eines Verlaufs des ersten Schenkels und/oder des zweiten Schenkels zumindest im Wesentlichen in sich torsionsfrei oder torsionsfrei gebogen ist.

Durch die erfindungsgemäße Ausgestaltung des Drahtgeflechts kann insbesondere eine hohe Belastbarkeit erzielt werden. Vorteilhaft kann ein Drahtgeflecht mit einer hohen Zugfestigkeit bereitgestellt werden. Ferner können Brüche im Geflecht, beispielsweise aufgrund einschlagender Gegenstände, reduziert werden. Weiterhin kann eine Festigkeit eines zu einer Herstellung verwendeten Drahts zumindest größtenteils beibehalten werden. Insbesondere werden eine Zugfestigkeit und/oder eine Sprödigkeit und/oder eine Biegesteifigkeit und/oder eine Bruchfestigkeit eines zu einer Herstellung verwendeten Drahts bei der Herstellung lediglich unwesentlich oder zumindest nur teilweise verändert. Vorteilhaft kann eine Häufigkeit von Drahtbrüchen bei einer Herstellung hochfester Drahtgeflechte reduziert oder Drahtbrüche vermieden werden. Außerdem können Fertigungsungenauigkeiten aufgrund von Materialunregelmäßigkeiten und/oder Eigenspannungen reduziert werden.

Unter einem "Draht" soll in diesem Zusammenhang insbesondere ein länglicher und/oder dünner und/oder zumindest maschinell biegbarer und/oder biegsamer Körper verstanden werden. Vorteilhaft weist der Draht entlang seiner Längsrichtung einen zumindest im Wesentlichen konstanten, insbesondere kreisförmigen oder elliptischen Querschnitt auf. Besonders vorteilhaft ist der Draht als ein Runddraht ausgebildet. Es ist aber auch denkbar, dass der Draht zumindest abschnittsweise oder vollständig als ein Flachdraht, ein Vierkantdraht, ein polygonaler Draht und/oder ein Profildraht ausgebildet ist. Beispielsweise kann der Draht zumindest teilweise oder auch vollständig aus Metall, insbesondere einer Metalllegierung, und/oder organischem und/oder anorganischem Kunststoff und/oder einem Kompositmaterial und/oder einem anorganischen nichtmetallischen Material und/oder einem keramischen Material ausgebildet sein. Es ist beispielsweise denkbar, dass der Draht als ein Polymerdraht oder ein Kunststoffdraht ausgebildet ist. Insbesondere kann der Draht als ein Verbunddraht ausgebildet sein, beispielsweise als ein Metall-organischer Verbunddraht und/oder ein Metall-anorganischer Verbunddraht und/oder ein Metall-Polymer-Verbunddraht und/oder ein Metall-Metall-Verbunddraht oder dergleichen. Insbesondere ist denkbar, dass der Draht zumindest zwei unterschiedliche Materialien umfasst, die insbesondere einer Verbundgeometrie gemäß relativ zueinander angeordnet und/oder zumindest teilweise miteinander vermischt sind. Vorteilhaft ist der Draht als ein Metalldraht, insbesondere als ein Stahldraht, insbesondere als ein Edelstahldraht ausgebildet. Weist die Wendel mehrere Drähte auf, sind diese vorzugsweise identisch. Es ist aber auch denkbar, dass die Wendel mehrere Drähte aufweist, die sich insbesondere hinsichtlich ihres Materials und/oder ihres Durchmessers und/oder ihres Querschnitts unterscheiden. Vorzugsweise weist der Draht eine insbesondere korrosionsbeständige Beschichtung und/oder Ummantelung wie beispielsweise eine Zinkbeschichtung und/oder eine Aluminium-Zink-Beschichtung und/oder eine Kunststoffbeschichtung und/oder eine PET-Beschichtung und/oder eine Metalloxidbeschichtung und/oder eine Keramikbeschichtung oder dergleichen auf. Vorteilhaft ist das Längselement der Draht.

Vorteilhaft ist die Quererstreckung der Wendel größer, insbesondere erheblich größer als ein Durchmesser des Drahts und/oder als ein Durchmesser des Längselements, aus dem die Wendel gefertigt ist. Je nach Anwendung und insbesondere je nach gewünschter Belastbarkeit und/oder je nach gewünschten Federeigenschaften des Drahtgeflechts, insbesondere in Frontalrichtung, kann die Quererstreckung beispielsweise zweimal oder dreimal oder fünfmal oder zehnmal oder 20-mal so groß sein wie der Durchmesser des Längselements, wobei auch dazwischenliegende Werte oder kleinere Werte oder größere Werte denkbar sind. Ebenso kann je nach Anwendung der Draht einen Durchmesser von beispielsweise etwa 1 mm, etwa 2 mm, etwa 3 mm, etwa 4 mm, etwa 5 mm, etwa 6 mm, etwa 7 mm oder noch mehr oder noch weniger oder auch einen Durchmesser eines dazwischenliegenden Werts aufweisen. Größere, insbesondere erheblich größere Durchmesser sind ferner denkbar, falls das Längselement mehrere Komponenten, insbesondere mehrere Drähte, umfasst, wie beispielsweise im Fall eines Drahtseils oder einer Litze oder eines Drahtbündels oder dergleichen. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Insbesondere ist das Drahtgeflecht als eine Böschungssicherung, als ein Sicherheitszaun, als ein Fangzaun, als ein Steinschlag-Schutznetz, als ein Absperrzaun, als ein Fischfarming-Netz, als ein Raubtier-Schutznetz, als ein Gehegezaun, als eine Tunnelsicherung, als ein Hangmurenschutz, als ein Motorsport-Schutzzaun, als ein Straßenzaun, als eine Lawinensicherung oder dergleichen ausgebildet. Insbesondere aufgrund seiner hohen Festigkeit und/oder Belastbarkeit sind auch Anwendungen als Abdeckung und/oder Umhüllung, beispielsweise von Kraftwerken, Fabrikgebäuden, Wohnhäuser oder anderen Gebäuden, als Explosionsschutz, als Geschossschutz, als Abschirmung gegen fliegende Objekte, als Fangnetz, als Rammschutz oder dergleichen denkbar. Das Drahtgeflecht kann beispielsweise horizontal oder vertikal oder schräg, insbesondere relativ zu einem Untergrund, ausgelegt und/oder angeordnet und/oder montiert sein. Insbesondere ist das Drahtgeflecht flächig ausgebildet. Vorteilhaft ist das Drahtgeflecht regelmäßig und/oder in zumindest eine Richtung periodisch aufgebaut. Bevorzugt ist das Drahtgeflecht einrollbar und/oder ausrollbar, insbesondere um eine Achse, welche parallel zu der Haupterstreckungsrichtung der Wendel verläuft. Insbesondere ist eine aus dem Drahtgeflecht aufgerollte Rolle in eine Richtung senkrecht zu der Haupterstreckungsrichtung der Wendel ausrollbar.

Vorteilhaft weist das Drahtgeflecht eine Vielzahl von insbesondere identisch ausgebildeten Maschen auf. Besonders vorteilhaft bilden die Wendeln die Maschen aus.

Vorzugsweise ist die Wendel spiralartig ausgebildet. Insbesondere ist die Wendel als eine abgeflachte Spirale ausgebildet. Vorteilhaft weist die Wendel entlang ihres Verlaufs einen zumindest im Wesentlichen konstanten oder einen konstanten Durchmesser und/oder Querschnitt auf. Vorzugsweise weist die Wendel und/oder der Draht und/oder das Längselement einen kreisförmigen Querschnitt auf. Besonders bevorzugt weist die Wendel eine Vielzahl von Schenkeln auf, welche vorteilhaft zumindest im Wesentlichen identisch oder identisch ausgebildet sind. Bevorzugt ist die Wendel aus einem einzelnen insbesondere unterbrechungsfreien Draht ausgebildet.

Unter "zumindest im Wesentlichen identischen" Objekten sollen in diesem Zusammenhang insbesondere Objekte verstanden werden, die derart konstruiert sind, dass sie jeweils eine gemeinsame Funktion erfüllen können und sich in ihrer Konstruktion abgesehen von Fertigungstoleranzen höchstens durch einzelne Elemente unterscheiden, die für die gemeinsame Funktion unwesentlich sind. Vorzugsweise soll unter "zumindest im Wesentlichen identisch" abgesehen von Fertigungstoleranzen und/oder im Rahmen fertigungstechnischer Möglichkeiten identisch verstanden werden. Unter einem "zumindest im Wesentlichen konstanten Wert" soll in diesem Zusammenhang insbesondere ein Wert verstanden werden, der um höchstens 20 %, vorteilhaft um höchstens 15 %, besonders vorteilhaft um höchstens 10 %, bevorzugt um höchstens 5 % und besonders bevorzugt um höchstens 2 % variiert. Darunter, dass ein Objekt einen "zumindest im Wesentlichen konstanten Querschnitt" aufweist, soll dabei insbesondere verstanden werden, dass für einen beliebigen ersten Querschnitt des Objekts entlang zumindest einer Richtung und einen beliebigen zweiten Querschnitt des Objekts entlang der Richtung ein minimaler Flächeninhalt einer Differenzfläche, die bei einem Übereinanderlegen der Querschnitte gebildet wird, maximal 20 %, vorteilhaft maximal 10 % und besonders vorteilhaft maximal 5 % des Flächeninhalts des größeren der beiden Querschnitte beträgt.

Insbesondere weist die Wendel eine Längsrichtung auf. Vorzugsweise ist die Längsrichtung der Wendel zumindest im Wesentlichen parallel oder parallel zu einer Haupterstreckungsrichtung der Wendel angeordnet. Vorzugsweise weist die Wendel eine Längsachse auf, die parallel zu der Längsrichtung der Wendel verläuft. Vorzugsweise ist die Haupterstreckungsebene der Wendel zumindest im Wesentlichen parallel zu der Haupterstreckungsebene des Drahtgeflechts angeordnet, zumindest in einem planar ausgelegten und/oder planar ausgerollten Zustand des Drahtgeflechts, welcher sich insbesondere von einem installierten Zustand des Drahtgeflechts unterscheiden kann. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Vorzugsweise weist das Drahtgeflecht eine Mehrzahl oder eine Vielzahl von insbesondere zumindest im Wesentlichen identisch ausgebildeten oder insbesondere identisch ausgebildeten Wendeln auf. Es ist auch denkbar, dass das Drahtgeflecht aus mehreren unterschiedlichen Wendeln ausgebildet ist. Insbesondere ist denkbar, dass das Drahtgeflecht eine Mehrzahl oder Vielzahl erster Wendeln und eine Mehrzahl oder Vielzahl zu den ersten Wendeln verschieden ausgebildeter zweiter Wendeln aufweist, die insbesondere abwechselnd angeordnet sind. Vorteilhaft sind die Wendeln miteinander verbunden. Insbesondere sind benachbarte Wendeln derart angeordnet, dass ihre Längsrichtungen parallel verlaufen. Vorzugsweise ist jeweils eine Wendel in jeweils zwei ihr benachbarte Wendeln eingeflochten und/oder eingedreht. Insbesondere ist das Drahtgeflecht herstellbar, indem in das Vorgeflecht eine Wendel eingedreht wird, in diese eingedrehte Wendel eine weitere Wendel eingedreht wird, in diese weitere eingedrehte Wendel wiederum eine Wendel eingedreht wird und so weiter. Insbesondere weisen die Wendeln des Drahtgeflechts denselben Drehsinn auf. Vorteilhaft sind jeweils zwei Wendeln miteinander verknotet, insbesondere jeweils an einem ersten ihrer Enden und/oder jeweils an einem den ersten Enden gegenüberliegenden zweiten ihrer Enden.

Vorzugsweise entspricht ein Torsionszustand des Längselements, insbesondere des Drahts, in der Wendel einem Torsionszustand des Längselements, insbesondere des Drahts, vor einem Biegen des Längselements, insbesondere des Drahts, zu der Wendel. Insbesondere ist das Längselement, insbesondere der Draht, entlang eines Abschnitts der Wendel, der wenigstens drei Biegestellen, vorteilhaft wenigstens vier Biegestellen, besonders vorteilhaft wenigstens 5 Biegestellen, vorzugsweise wenigstens 10 Biegestellen, besonders bevorzugt wenigstens 15 Biegestellen und einem besonders vorzuziehenden Fall wenigstens 20 Biegestellen umfasst, um weniger als eine ganze Umdrehung in sich selbst insbesondere um seine Längsachse verdreht. Insbesondere ist das Längselement entlang eines Abschnitts der Wendel, der eine bestimmte Anzahl an Biegestellen umfasst, um einen Winkel in sich verdreht, der kleiner, vorteilhaft wenigstens zweimal kleiner, besonders vorteilhaft wenigstens dreimal kleiner, vorzugsweise wenigstens fünfmal kleiner und besonders vorteilhaft wenigstens zehnmal kleiner ist als eine Summe aller Biegewinkel aller Biegestellen des Abschnitts. Vorzugsweise weist das Längselement, insbesondere der Draht, eine kleinere Torsion auf als ein Längselement im Fall eines Biegens von Biegestellen, bei welchem das zu biegende Längselement derart festgehalten wird, dass eine Rotation um seine Längsachse verhindert wird, aufweisen würde.

Insbesondere ist der Draht zumindest teilweise, insbesondere abgesehen von einer Beschichtung vollständig aus hochfestem Stahl gefertigt ist. Beispielsweise kann es sich bei dem hochfesten Stahl um Federstahl und/oder einem für Drahtseile geeigneten Stahl handeln. Insbesondere weist der Draht eine Zugfestigkeit von wenigstens 800 N mm⁻², vorteilhaft von wenigstens 1000 N mm⁻², besonders vorteilhaft von wenigstens 1200 N mm⁻², vorzugsweise von wenigstens 1400 N mm⁻² und besonders bevorzugt von wenigstens 1600 N mm⁻², insbesondere eine Zugfestigkeit von etwa 1770 N mm⁻² oder von etwa 1960 N mm⁻² auf. Es ist auch denkbar, dass der Draht eine noch höhere Zugfestigkeit aufweist, beispielsweise eine Zugfestigkeit von wenigstens 2000 N mm⁻², oder von wenigstens 2200 N mm⁻², oder auch von wenigstens 2400 N mm⁻².. Hierdurch kann eine hohe Belastbarkeit, insbesondere eine hohe Zugfestigkeit und/oder eine hohe Steifigkeit quer zum Geflecht erzielt werden.

In einer vorteilhaften Ausgestaltung der Erfindung wird vorgeschlagen, dass das Längselement, insbesondere der Draht, entlang eines Verlaufs der Biegestelle in sich zumindest im Wesentlichen torsionsfrei oder in sich torsionsfrei gebogen ist. Insbesondere ist das Längselement, insbesondere der Draht, entlang eines Verlaufs der Wendel in sich zumindest im Wesentlichen torsionsfrei oder in sich torsionsfrei gebogen. Vorteilhaft ist die Wendel in sich torsionsfrei. Vorzugsweise ist das Drahtgeflecht aus in sich torsionsfrei gebogenen Wendeln geflochten. Hierdurch kann vorteilhaft eine belastbare Verbindung zwischen benachbarten Wendeln eines Drahtgeflechts bereitgestellt werden. Ferner können hierdurch Brüche im Bereich von Biegestellen vermieden werden.

In einer besonders vorteilhaften Ausgestaltung der Erfindung wird vorgeschlagen, dass eine Oberflächenstruktur des ersten Schenkels und/oder des zweiten Schenkels eine Vorzugsrichtung aufweist, die sich parallel zu einer Haupterstreckungsrichtung des ersten Schenkels und/oder des zweiten Schenkels erstreckt. Vorteilhaft weist der erste Schenkel und/oder der zweite Schenkel zumindest ein Oberflächenstrukturelement auf, das sich parallel zu der Haupterstreckungsrichtung des ersten Schenkels und/oder des zweiten Schenkels erstreckt. Beispielsweise kann das Oberflächenstrukturelement als eine Erhebung, insbesondere von weniger als 50 µm, vorteilhaft von weniger als 20 µm und besonders vorteilhaft von weniger als 10 µm und/oder als ein an einer Drahtoberfläche angeordneter Materialbereich und/oder als ein Oberflächengefüge ausgebildet sein. Insbesondere umfasst die Oberflächenstruktur eine Vielzahl von Oberflächenstrukturelementen. Vorteilhaft verläuft eine Mehrzahl der Oberflächenstrukturelemente zumindest im Wesentlichen parallel oder parallel zu der Haupterstreckungsrichtung des ersten Schenkels und/oder des zweiten Schenkels. Insbesondere entspricht die Vorzugsrichtung einer mittleren Richtung von Einzelverläufen der Oberflächenstrukturelemente. Insbesondere bildet die Beschichtung des Drahts die Oberflächenstruktur aus. Es ist aber auch denkbar, dass der Draht frei von einer Beschichtung ist und die Oberflächenstruktur ausbildet. Hierdurch kann eine hohe Zugfestigkeit erzielt werden.

Zudem wird vorgeschlagen, dass die Oberflächenstruktur des ersten Schenkels und/oder des zweiten Schenkels frei von bezüglich der Haupterstreckungsrichtung des ersten Schenkels und/oder des zweiten Schenkels spiralartig und/oder helikal verlaufenden, insbesondere sich um die Längsrichtung der Wendel drehenden und/oder schlängelnden Teilstrukturen ist. Hierdurch kann vorteilhaft ein Brechen oder Reißen eines Drahtgeflechts in einem Bereich eines Schenkels vermieden werden.

Zudem wird vorgeschlagen, dass in einer Querbetrachtung parallel zu einer Haupterstreckungsebene der Wendel und senkrecht zu einer Längsrichtung der Wendel die Biegestelle zumindest abschnittsweise einem zumindest annähernd geraden Verlauf, insbesondere einem geraden Verlauf folgt. Unter "zumindest annähernd gerade" soll in diesem Zusammenhang insbesondere im Rahmen von Fertigungstoleranzen gerade, vorzugsweise linear, verstanden werden. Vorzugsweise folgt in der Querbetrachtung ein Abschnitt der Biegestelle dem zumindest annährend geraden oder geraden Verlauf, welcher Abschnitt wenigstens 50 %, vorteilhaft wenigstens 75 % und besonders vorteilhaft wenigstens 85 % der Biegestelle umfasst. Voreilhaft ist die Biegestelle in dem Abschnitt, insbesondere in einem Bereich der Biegestelle, in einer Ebene gekrümmt, die parallel zu dem annähernd geraden Verlauf der Biegestelle angeordnet ist. Vorzugsweise verläuft in der Frontalbetrachtung der annähernd gerade Verlauf zumindest im Wesentlichen parallel oder parallel zu der Längsrichtung der Wendel. Hierdurch kann eine Biegestelle mit einer hohen Zugfestigkeit und/oder mit einer hohen Biegesteifigkeit bereitgestellt werden. Ferner kann hierdurch eine im Hinblick auf eine Verknüpfung von Biegestellen unterschiedlicher Wendeln vorteilhafte Geometrie bereitgestellt werden.

Ferner wird vorgeschlagen, dass in der Querbetrachtung die Wendel zumindest abschnittsweise einem stufigen, insbesondere schräg-stufigen Verlauf folgt. Vorzugsweise bilden der erste Schenkel, die Biegestelle und der zweite Schenkel in der Querbetrachtung den stufigen Verlauf aus, wobei die Biegestelle oder zumindest deren annähernd gerader Verlauf mit dem ersten Schenkel und/oder mit dem zweiten Schenkel einen Winkel einschließt, der einem Steigungswinkel der Biegestelle entspricht.

Eine hohe Stabilität eines Drahtgeflechts quer zu seiner Fläche kann erzielt werden, wenn der erste Schenkel und/oder der zweite Schenkel zumindest abschnittsweise einem geraden Verlauf folgt. Vorteilhaft bilden der erste Schenkel und der zweite Schenkel gerade Seiten einer Masche des Drahtgeflechts. Besonders vorteilhaft ist der gesamte erste Schenkel und/oder der gesamte zweite Schenkel gerade ausgebildet. Insbesondere weist der erste Schenkel und/oder der zweite Schenkel eine Länge von wenigstens 1 cm, vorteilhaft von wenigstens 2 cm, besonders vorteilhaft von wenigstens 3 cm, vorzugsweise von wenigstens 5 cm und besonders bevorzugt von wenigstens 7 cm auf. Der erste Schenkel und der zweite Schenkel können aber beliebige andere, insbesondere erheblich größere Längen aufweisen. Beispielsweise kann der erste Schenkel und/oder der zweite Schenkel eine Länge von wenigstens 10 cm oder von wenigstens 15 cm oder von wenigstens 20 cm oder von wenigstens 25 cm oder eine noch größere Länge aufweisen, insbesondere in dem Fall, dass die Wendel aus einer Drahtlitze, einem Drahtseil, einem Drahtbündel oder dergleichen ausgebildet ist.

In einer weiteren Ausgestaltung der Erfindung wird vorgeschlagen, dass der erste Schenkel zumindest abschnittsweise in einer ersten Ebene und der zweite Schenkel zumindest abschnittsweise in einer zu der ersten Ebene parallelen zweiten Ebene verlaufen. Insbesondere verlaufen zumindest zwei benachbarte Schenkel der Wendel in parallelen Ebenen. Vorteilhaft verläuft der erste Schenkel in der Querbetrachtung parallel zu dem zweiten Schenkel. Vorzugsweise verlaufen der erste Schenkel und der weitere erste Schenkel in der ersten Ebene und/oder der zweite Schenkel und der weitere zweite Schenkel in der zweiten Ebene. Vorzugsweise definiert die erste Ebene eine Vorderseite des Drahtgeflechts und/oder die zweite Ebene eine Rückseite des Drahtgeflechts oder umgekehrt. Hierdurch kann ein Drahtgeflecht mit einer doppelflächigen und/oder doppelwandigen Struktur bereitgestellt werden. Vorzugsweise können hierdurch quer zum Geflecht wirkende Kräfte unter minimaler Verformung des Geflechts effektiv aufgenommen werden.

Ferner geht die Erfindung aus von einem Verfahren zur Herstellung einer Wendel für ein Drahtgeflecht, insbesondere für ein Sicherheitsnetz, insbesondere nach einem der vorhergehenden Ansprüche, wobei die Wendel aus zumindest einem Einzeldraht, einem Drahtbündel, einer Drahtlitze, einem Drahtseil und/oder einem anderen Längselement mit zumindest einem, insbesondere einen hochfesten Stahl aufweisenden, Draht derart gebogen wird, dass sie zumindest einen ersten Schenkel, zumindest einen zweiten Schenkel sowie zumindest eine den ersten Schenkel und den zweiten Schenkel miteinander verbindende Biegestelle umfasst.

Es wird vorgeschlagen, dass das Längselement, insbesondere der Draht, entlang eines Verlaufs des ersten Schenkels und/oder des zweiten Schenkels zumindest im Wesentlichen in sich torsionsfrei gebogen wird.

Durch das erfindungsgemäße Verfahren können vorteilhafte Eigenschaften hinsichtlich einer Belastbarkeit eines Drahtgeflechts erzielt werden. Vorteilhaft kann ein Drahtgeflecht mit einer hohen Zugfestigkeit bereitgestellt werden. Ferner können Brüche im Geflecht, beispielsweise aufgrund einschlagender Gegenstände, reduziert werden. Weiterhin kann eine Festigkeit eines zu einer Herstellung verwendeten Drahts zumindest größtenteils beibehalten werden. Insbesondere werden eine Zugfestigkeit und/oder eine Sprödigkeit und/oder eine Biegesteifigkeit und/oder eine Bruchfestigkeit eines zu einer Herstellung verwendeten Drahts bei der Herstellung lediglich unwesentlich oder zumindest nur teilweise verändert. Vorteilhaft können Drahtbrüche bei einer Herstellung hochfester Drahtgeflechte vermieden oder zumindest reduziert werden. Außerdem können Fertigungsungenauigkeiten aufgrund von Materialverspannungen reduziert werden.

Vorteilhaft wird das Längselement, insbesondere der Draht, mittels zumindest einer Biegevorrichtung gebogen. Besonders vorteilhaft weist die Biegevorrichtung zumindest einen Biegetisch auf. Vorzugsweise weist die Biegevorrichtung zumindest einen Biegedorn auf, um den das Längselement, insbesondere der Draht, bei dem Biegen gebogen wird, insbesondere von dem Biegetisch. Vorzugsweise wird der Draht dem Biegedorn unter einem Winkel zugeführt, der von 90° verschieden ist und der insbesondere einem Steigungswinkel des ersten Schenkels relativ zu der Längsrichtung der Wendel entspricht.

Insbesondere ist das Verfahren zur Herstellung des Drahtgeflechts vorgesehen. Vorteilhaft umfasst das Verfahren wenigstens einen Verfahrensschritt, der zu einer Erzeugung und/oder Umsetzung wenigstens eines der Merkmale des Drahtgeflechts vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Darunter, dass ein Verfahren zu einem Zweck "vorgesehen" ist, soll insbesondere verstanden werden, dass das Verfahren zumindest einen Verfahrensschritt beinhaltet, der speziell auf den Zweck abzielt und/oder dass das Verfahren gezielt auf den Zweck gerichtet ist und/oder dass das Verfahren einer Erfüllung des Zwecks dient und auf diese Erfüllung hin zumindest teilweise optimiert ist.

Darunter, dass ein Verfahrensschritt zu einem Zweck "vorgesehen" ist, soll insbesondere verstanden werden, dass der Verfahrensschritt speziell auf den Zweck abzielt und/oder dass der Verfahrensschritt gezielt auf den Zweck gerichtet ist und/oder dass der Verfahrensschritt einer Erfüllung des Zwecks dient und auf diese Erfüllung hin zumindest teilweise optimiert ist.

Ferner wird vorgeschlagen, dass das Längselement, insbesondere der Draht, der Biegevorrichtung zu einem Biegen zugeführt wird, wobei das Längselement, insbesondere der Draht, bei einem Zuführen um seine Längsachse rotiert wird. Vorzugsweise entspricht eine Rotationsrichtung des Längselements, insbesondere der Draht, bei dem Zuführen einem Drehsinn der Wendel. Insbesondere wird das Längselement, insbesondere der Draht derart um seine Längsachse rotiert, dass eine bei dem Biegen um den Biegedorn auftretende Torsion ausgeglichen wird. Hierdurch kann vorteilhaft ein Tordieren eines Drahtes bei einem Biegen einer Wendel vermieden werden.

Außerdem wird vorgeschlagen, dass das Längselement insbesondere der Draht, einen rotierenden Richtapparat durchläuft. Vorteilhaft wird der Richtapparat um die Längsachse des Längselements, insbesondere des Drahts, rotiert, insbesondere mit einer Rotationsgeschwindigkeit, die insbesondere zumindest im Wesentlichen einer Rotationsgeschwindigkeit des Längselements, insbesondere des Drahts, um dessen Längsachse entspricht. Vorzugsweise ist der Richtapparat um die Längsachse des Längselements, insbesondere des Drahts, drehbar gelagert. Hierdurch kann vorteilhaft eine hohe Präzision einer Fertigung bei einem zugleich hohen Durchsatz erzielt werden.

In einer bevorzugten Ausgestaltung der Erfindung wird vorgeschlagen, dass das Längselement, insbesondere der Draht, von einer mitrotierten Haspel abgewickelt wird. Vorteilhaft ist die Haspel um eine Abrollachse drehbar gelagert. Besonders vorteilhaft ist die Haspel, insbesondere ein Abrolllager der Haspel, um eine Rotationsachse drehbar gelagert. Insbesondere ist die Rotationsachse der Haspel von der Abrollachse der Haspel verschieden. Vorzugsweise verläuft die Abrollachse der Haspel senkrecht zu der Rotationsachse der Haspel. Insbesondere wird die Abrollachse bei einem Mitrotieren der Haspel um die Rotationsachse rotiert. Insbesondere ist eine Rotation der Haspel mit einer Rotation des Richtapparats synchronisiert. Insbesondere wird die Haspel mit einer Rotationsgeschwindigkeit um die Rotationsachse der Haspel mitrotiert, die insbesondere zumindest im Wesentlichen einer Rotationsgeschwindigkeit des Längselements, insbesondere des Drahts, um dessen Längsachse entspricht. Unter "zumindest im Wesentlichen" soll in diesem Zusammenhang insbesondere verstanden werden, dass eine Abweichung von einem vorgegebenen Wert insbesondere weniger als 15 %, vorzugsweise weniger als 10 % und besonders bevorzugt weniger als 5 % des vorgegebenen Werts entspricht. Hierdurch kann vorteilhaft eine hohe Betriebsdauer zwischen einem Drahtwechsel erzielt werden. Ferner kann hierdurch ein Tordieren eines Drahts bei einem Zuführen zu einer Biegevorrichtung vermieden werden.

In einer besonders bevorzugten Ausgestaltung der Erfindung wird vorgeschlagen, dass mittels zumindest einer Anpassung der Rotationsgeschwindigkeit des Längselements, insbesondere des Drahts, eine Torsion des Längselements, insbesondere des Drahts, bei dem Biegen mittels der Biegevorrichtung ausgeglichen wird. Insbesondere entspricht die Rotationsgeschwindigkeit des Längselements, insbesondere des Drahts, zumindest im Wesentlichen einer durch das Biegen hervorgerufenen Torsionsgeschwindigkeit des Längselements, insbesondere des Drahts. Hierdurch kann vorteilhaft eine schnelle und präzise Fertigung torsionsfreier Wendeln für ein Drahtgeflecht erzielt werden.

Weiterhin wird vorgeschlagen, dass das Längselement, insbesondere der Draht, für ein Biegen der Biegestelle wenigstens um einen Ausgleichswinkel rotiert wird, der einem Winkel zwischen dem ersten Schenkel und dem zweiten Schenkel in einer Frontalbetrachtung senkrecht zu einer Haupterstreckungsebene der Wendel, insbesondere einem Winkel zwischen einer Längsachse des ersten Schenkels und einer Längsachse des zweiten Schenkels, entspricht. Insbesondere wird das Längselement, insbesondere der Draht, je gebogener Biegestelle um den Ausgleichswinkel rotiert. Vorteilhaft entspricht eine Winkelgeschwindigkeit der Rotation des Längselements, insbesondere des Drahts, dem Winkel zwischen dem ersten Schenkel und dem zweiten Schenkel in der Frontalbetrachtung multipliziert mit einer Fertigungsrate eines Biegens von Biegestellen. Hierdurch kann vorteilhaft eine Ausgleichsrotation eines Längselements an eine Geometrie einer zu biegenden Wendel angepasst werden.

Vorteilhafte Eigenschaften hinsichtlich einer präzisen und/oder schnelle Fertigung eines belastbaren Drahtgeflechts können mit einer Herstellungsvorrichtung zur Herstellung eines Drahtgeflechts, welche dazu vorgesehen ist, das erfindungsgemäße Verfahren durchzuführen, erzielt werden.

Ein erfindungsgemäßes Drahtgeflecht, eine erfindungsgemäße Biegevorrichtung und ein erfindungsgemäßes Verfahren sollen hierbei nicht auf die oben beschriebenen Anwendungen und Ausführungsformen beschränkt sein. Insbesondere können ein erfindungsgemäßes Drahtgeflecht, eine erfindungsgemäße Biegevorrichtung und ein erfindungsgemäßes Verfahren zu einer Erfüllung einer hierin beschriebenen Funktionsweise eine von einer hierin genannten Anzahl von einzelnen Elementen und/oder Bauteilen und/oder Einheiten und/oder Verfahrensschritten abweichende Anzahl aufweisen.

### Zeichnungen

Weitere Vorteile ergeben sich aus der folgenden Zeichnungsbeschreibung. In den Zeichnungen ist sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil eines Drahtgeflechts in einer schematischen Frontansicht,
- Fig. 2: einen Teil einer Wendel des Drahtgeflechts in einer perspektivischen Darstellung,
- Fig. 3: einen weiteren Teil des Drahtgeflechts in einer schematischen Frontansicht,
- Fig. 4: zwei Schenkel sowie eine Biegestelle der Wendel in unterschiedlichen Ansichten,
- Fig. 5: zwei miteinander verbundene Biegestellen zweier Wendeln in unterschiedlichen Ansichten,
- Fig. 6: einen Teil der Wendel in einer Längsbetrachtung, in einer schematischen Darstellung,
- Fig. 7: einen Teil der Wendel in einer Querbetrachtung, in einer schematischen Darstellung,
- Fig. 8: einen Teil der Wendel in einer perspektivischen Darstellung,
- Fig. 9: ein schematisches Ablaufdiagramm eines Verfahrens zur Herstellung des Drahtgeflechts,
- Fig. 10: eine Herstellungsvorrichtung zur Herstellung des Drahtgeflechts in einer schematischen Darstellung,
- Fig. 11: eine Biegevorrichtung der Herstellungsvorrichtung in einer perspektivischen Darstellung,
- Fig. 12: einen Biegeraum der Biegevorrichtung in einem ersten Betriebszustand in einer perspektivischen Darstellung,
- Fig. 13: den Biegeraum in einem zweiten Betriebszustand in einer perspektivischen Darstellung,
- Fig. 14: einen Teil eines weiteren Drahtgeflechts in einer schematischen Frontansicht und
- Fig. 15: einen Teil des weiteren Drahtgeflechts in einer Längsbetrachtung, in einer schematischen Darstellung.

### Beschreibung der Ausführungsbeispiele

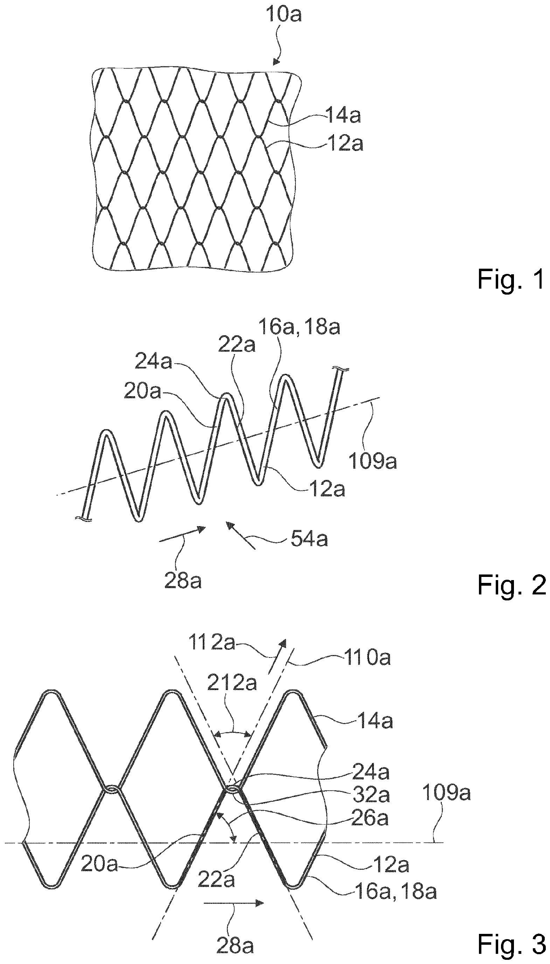

Die Figur 1 zeigt einen Teil eines Drahtgeflechts 10a in einer schematischen Frontansicht. Das Drahtgeflecht 10a ist als ein Sicherheitsnetz ausgebildet. Das gezeigte Drahtgeflecht 10a kann beispielsweise als Böschungssicherung, Lawinen-Schutznetz, Fangzaun oder dergleichen eingesetzt werden. Das Drahtgeflecht 10a weist mehrere ineinander geflochtene Wendeln 12a, 14a auf, insbesondere eine Wendel 12a und eine weitere Wendel 14a. Im vorliegenden Fall weist das Drahtgeflecht 10a eine Vielzahl identisch ausgebildeter Wendeln 12a, 14a auf, die ineinander eingedreht sind und das Drahtgeflecht 10a ausbilden.

Die Figur 2 zeigt einen Teil der Wendel 12a des Drahtgeflechts 10a in einer perspektivischen Darstellung. Die Figur 3 zeigt einen weiteren Teil des Drahtgeflechts 10a in einer schematischen Frontansicht. Die Wendel 12a ist aus einem Längselement 16a gefertigt. Das Längselement 16a weist einen Draht 18a auf. Im vorliegenden Fall ist das Längselement 16a der Draht 18a. Es ist aber auch denkbar, dass ein Längselement eine Mehrzahl von Drähten und/oder anderen Elementen umfasst. Beispielsweise kann ein Längselement als ein Drahtseil, ein Drahtbündel, eine Drahtlitze oder dergleichen ausgebildet sein. Im Folgenden werden die Eigenschaften des Drahts 18a beschrieben. Diese sind aber auf den Fall anderer Längselemente entsprechend übertragbar. In analoger Weise zu dem gezeigten Draht 18a kann beispielsweise eine Litze oder ein Drahtbündel oder ein anderes Längselement zu einer Wendel gebogen und Wendeln aus derartigen Längselementen entsprechend zu einem Drahtgeflecht verbunden sein.

Im vorliegenden Fall ist der Draht 18a als ein Einzeldraht ausgebildet. Der Draht 18a weist eine korrosionsbeständige Beschichtung auf. Der Draht 18a ist zu der Wendel 12a gebogen. Die Wendel 12a ist einteilig ausgebildet. Die Wendel 12a ist aus einem einzelnen Drahtstück gefertigt. Im vorliegenden Fall weist der Draht 18a einen Durchmesser von 3 mm auf. Der Draht 18a ist zumindest teilweise aus einem hochfesten Stahl gefertigt. Der Draht 18a ist als ein hochfester Stahldraht ausgebildet. Der Draht 18a weist eine Zugfestigkeit von wenigstens 800 N mm⁻² auf. Im vorliegenden Fall weist der Draht 18a eine Zugfestigkeit von etwa 1770 N mm⁻² auf. Selbstverständlich sind, wie oben erwähnt, jedoch auch andere Zugfestigkeiten denkbar, insbesondere auch Zugfestigkeiten von mehr als 2200 N mm⁻². Insbesondere ist denkbar, dass ein Draht aus höchstfestem Stahl gefertigt ist. Es ist auch denkbar, dass ein Draht einen anderen Durchmesser, wie beispielsweise weniger als 1 mm oder etwa 1 mm oder etwa 2 mm oder etwa 4 mm oder etwa 5 mm oder etwa 6 mm oder einen noch größeren Durchmesser aufweist. Wie oben erwähnt ist denkbar, dass ein Draht unterschiedliche Materialien aufweist und insbesondere als ein Verbunddraht ausgebildet ist.

Die Wendel 12a und die weitere Wendel 14a sind identisch ausgebildet. Im Folgenden ist daher exemplarisch die Wendel 12a detaillierter beschrieben. Es ist jedoch denkbar, dass ein Drahtgeflecht wenigstens eine erste Wendel und wenigstens eine von der ersten Wendel verschieden ausgebildete zweite Wendel umfasst.

Die Wendel 12a weist einen ersten Schenkel 20a, einen zweiten Schenkel 22a sowie eine den ersten Schenkel 20a und den zweiten Schenkel 22a verbindende Biegestelle 24a auf. Im vorliegenden Fall weist die Wendel 12a eine Vielzahl von ersten Schenkeln 20a, eine Vielzahl von zweiten Schenkeln 22a sowie eine Vielzahl von Biegestellen 24a auf, die aus Gründen einer Übersichtlichkeit nicht alle mit Bezugszeichen versehen sind. Ferner sind im vorliegenden Fall die ersten Schenkel 20a zumindest im Wesentlichen identisch zueinander ausgebildet. Außerdem sind im vorliegenden Fall die zweiten Schenkel 22a zumindest im Wesentlichen identisch zueinander ausgebildet. Zudem sind im vorliegenden Fall die Biegestellen 24a zumindest im Wesentlichen identisch zueinander ausgebildet. Im Folgenden sind daher exemplarisch der erste Schenkel 20a, der zweite Schenkel 22a und die Biegestelle 24a detaillierter beschrieben. Selbstverständlich ist denkbar, dass ein Drahtgeflecht unterschiedliche erste Schenkel und/oder unterschiedliche zweite Schenkel und/oder unterschiedliche Biegestellen aufweist.

Die Wendel 12a weist eine Längsrichtung 28a auf. Die Wendel 12a weist eine Längsachse 109a auf, die parallel zu der Längsrichtung 28a verläuft. Die Längsrichtung 28a entspricht einer Haupterstreckungsrichtung der Wendel 12a. In einer Frontalbetrachtung senkrecht zu einer Haupterstreckungsebene der Wendel 12a verläuft der erste Schenkel 20a mit einem ersten Steigungswinkel 26a bezüglich der Längsrichtung 28a der Wendel 12a. Insbesondere ist die Frontalbetrachtung eine Betrachtung in Frontalrichtung 54a. Der erste Schenkel 20a weist eine Längsachse 110a auf. Die Längsachse 110a des ersten Schenkels 20a verläuft parallel zu einer Haupterstreckungsrichtung 112a des ersten Schenkels 20a. In der Figur 3 ist die Wendel 12a in der Frontalbetrachtung dargestellt. Die Längsachse 109a der Wendel 12a und die Längsachse 110a des ersten Schenkels 20a schließen den ersten Steigungswinkel 26a ein. Der erste Schenkel 20a weist im vorliegenden Fall eine Länge von etwa 65 mm auf. Der zweite Schenkel 22a weist im vorliegenden Fall eine Länge von etwa 65 mm auf.

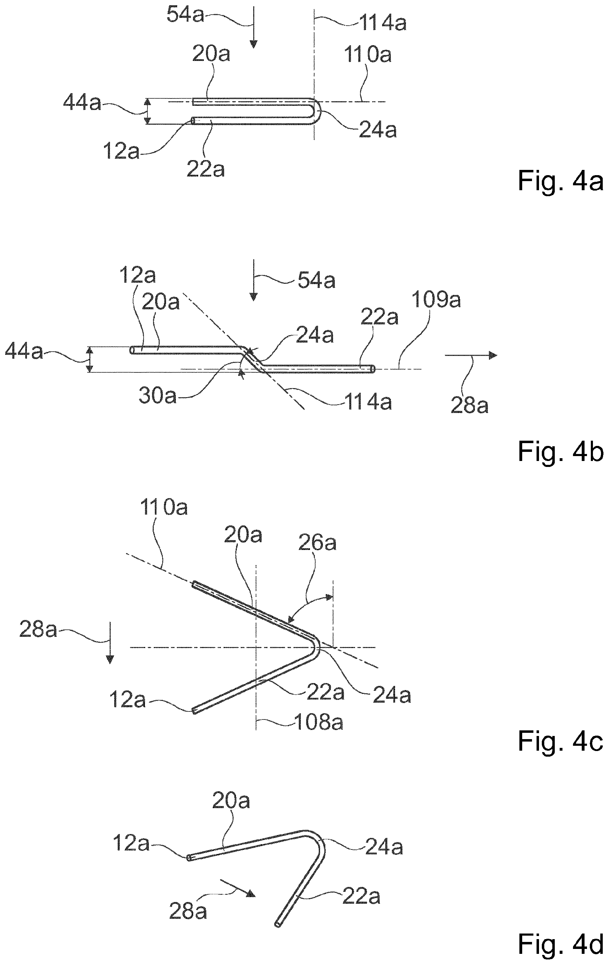

Die Figur 4 zeigt einen Teil der Wendel 12a, der den ersten Schenkel 20a, den zweiten Schenkel 22a sowie die Biegestelle 24a umfasst, in unterschiedlichen Ansichten. Figur 4a zeigt eine Betrachtung in Längsrichtung 28a der Wendel 12a. Figur 4b zeigt den ersten Schenkel 20a, den zweiten Schenkel 22a und die Biegestelle 24a in einer Querbetrachtung senkrecht zu der Längsrichtung 28a der Wendel 12a und in der Haupterstreckungsebene der Wendel 12a. Figur 4c zeigt eine Betrachtung in Frontalrichtung 54a. Figur 4d zeigt eine perspektivische Betrachtung. In der Querbetrachtung verläuft die Biegestelle 24a zumindest abschnittsweise mit einem von dem ersten Steigungswinkel 26a verschiedenen zweiten Steigungswinkel 30a bezüglich der Längsrichtung 28a der Wendel 12a. In der Querbetrachtung weist die Biegestelle 24a eine Längsachse 114a auf. Die Längsachse 114a der Biegestelle 24a und die Längsachse 109a der Wendel 12a schließen den zweiten Steigungswinkel 30a ein.

Der zweite Steigungswinkel 30a weicht um wenigstens 5° von dem ersten Steigungswinkel 26a ab. Der zweite Steigungswinkel 30a weist einen Wert zwischen 25° und 65° auf. Ferner ist der erste Steigungswinkel 26a größer als 45°. Im vorliegenden Fall beträgt der erste Steigungswinkel 26a etwa 60°. Ferner beträgt im vorliegenden Fall der zweite Steigungswinkel 30a etwa 45°. Der zweite Steigungswinkel 30a ist kleiner als der erste Steigungswinkel 26a.

Selbstverständlich ist auch denkbar, dass ein erster Steigungswinkel und ein zweiter Steigungswinkel identisch sind. Beispielsweise können ein erster Steigungswinkel und ein zweiter Steigungswinkel beide jeweils zumindest im Wesentlichen oder genau 45° betragen. Es sind auch andere Werte denkbar, beispielsweise 30° oder 35° oder 40° oder 50° oder 55° oder 60° oder 65° oder 70° oder weitere, insbesondere noch größere oder noch kleinere Werte. Werte für einen ersten Steigungswinkel und einen zweiten Steigungswinkel wird der Fachmann insbesondere in Abhängigkeit von einem Anforderungsprofil an ein entsprechendes Drahtgeflecht geeignet wählen.

Die Biegestelle 24a folgt in der Querbetrachtung zumindest abschnittsweise einem zumindest annähernd geraden Verlauf. Im vorliegenden Fall folgt ein Großteil der Biegestelle 24a in der Querbetrachtung dem geraden Verlauf.

Die Wendel 12a folgt in der Querbetrachtung zumindest abschnittsweise einem stufigen Verlauf. Der stufige Verlauf ist schräg-stufig.

Der erste Schenkel 20a folgt zumindest abschnittsweise einem geraden Verlauf. Im vorliegenden Fall folgt der erste Schenkel 20a einem geraden Verlauf. Der zweite Schenkel 22a folgt zumindest abschnittsweise einem geraden Verlauf. Im vorliegenden Fall folgt der zweite Schenkel 22a einem geraden Verlauf. Der erste Schenkel 20a und/oder der zweite Schenkel 22a sind frei von einer Krümmung und/oder einer Biegung und/oder einem Knick. Die Biegestelle 24a umfasst einen Verlauf, der in einer Längsbetrachtung parallel zu der Längsrichtung 28a der Wendel 12a eine Biegung um 180° beschreibt. In der Figur 4a ist die Wendel 12a in der Längsbetrachtung dargestellt.

Der erste Schenkel 20a verläuft zumindest abschnittsweise, insbesondere vollständig, in einer ersten Ebene und der zweite Schenkel 22a verläuft zumindest abschnittsweise, insbesondere vollständig, in einer zu der ersten Ebene parallelen zweiten Ebene. In der Längsbetrachtung verläuft der erste Schenkel 20a parallel zu dem zweiten Schenkel 22a.

Die weitere Wendel 14a weist eine weitere Biegestelle 32a auf. Die Biegestelle 24a und die weitere Biegestelle 32a sind verbunden. Die Biegestelle 24a und die weitere Biegestelle 32a bilden einen Verknüpfungspunkt der Wendel 12a und der weiteren Wendel 14a.

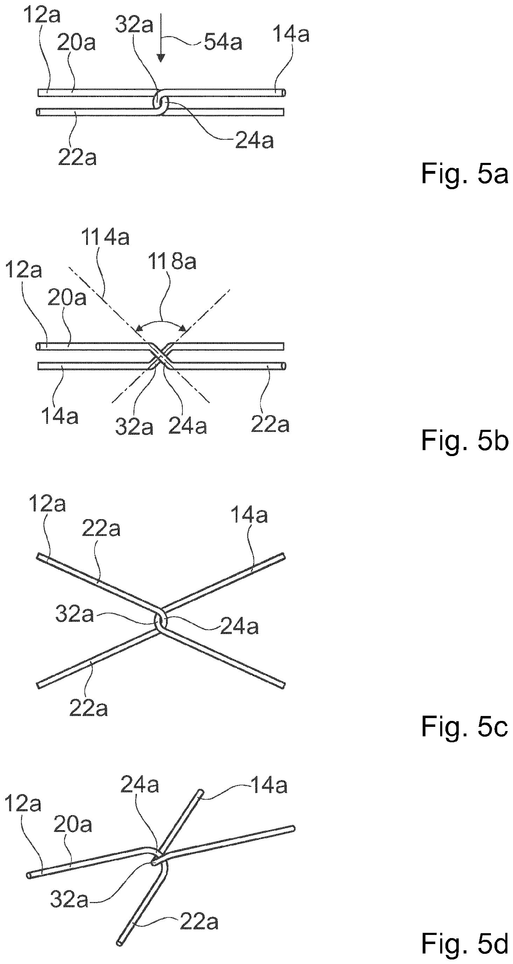

Die Figur 5 zeigt einen Teil des Drahtgeflechts 10a, der die Biegestelle 24a und die weitere Biegestelle 32a umfasst, in unterschiedlichen Ansichten. Figur 5a zeigt eine Betrachtung in Längsrichtung 28a der Wendel 12a. Figur 5b zeigt den Teil des Drahtgeflechts 10a in einer Querbetrachtung senkrecht zu der Längsrichtung 28a der Wendel 12a in der Haupterstreckungsebene der Wendel 12a. Figur 5c zeigt eine Betrachtung in Frontalrichtung 54a. Figur 5d zeigt eine perspektivische Betrachtung.

Die Wendel 12a und die weitere Wendel 14a kreuzen sich in einem Bereich der weiteren Biegestelle 32a zumindest im Wesentlichen senkrecht. In der Querbetrachtung schließen die Biegestelle 24a und die weitere Biegestelle 32a einen Kreuzungswinkel 118a ein. Der Kreuzungswinkel 118a ist abhängig von dem zweiten Steigungswinkel 30a und einem entsprechend definierten weiteren zweiten Steigungswinkel der weiteren Wendel 14a. Im vorliegenden Fall beträgt der Kreuzungswinkel 118a 90°.

Auch für andere erste Steigungswinkel wird vorteilhaft ein zweiter Steigungswinkel von 45° gewählt, sodass sich entsprechend ausgestaltete Wendeln an Verbindungspunkten senkrecht kreuzen und diese Verbindungspunkte vorteilhaft eine hohe mechanische Belastbarkeit aufweisen. Selbstverständlich sind aber auch von 90° verschiedene Kreuzungswinkel denkbar, beispielsweise mit einem Betrag von 45° oder 60° oder 120° oder 145° oder einem größeren, kleineren oder dazwischenliegenden Betrag. Einen Kreuzungswinkel wird der Fachmann insbesondere in Abhängigkeit von einem Anforderungsprofil an ein entsprechendes Drahtgeflecht geeignet wählen.

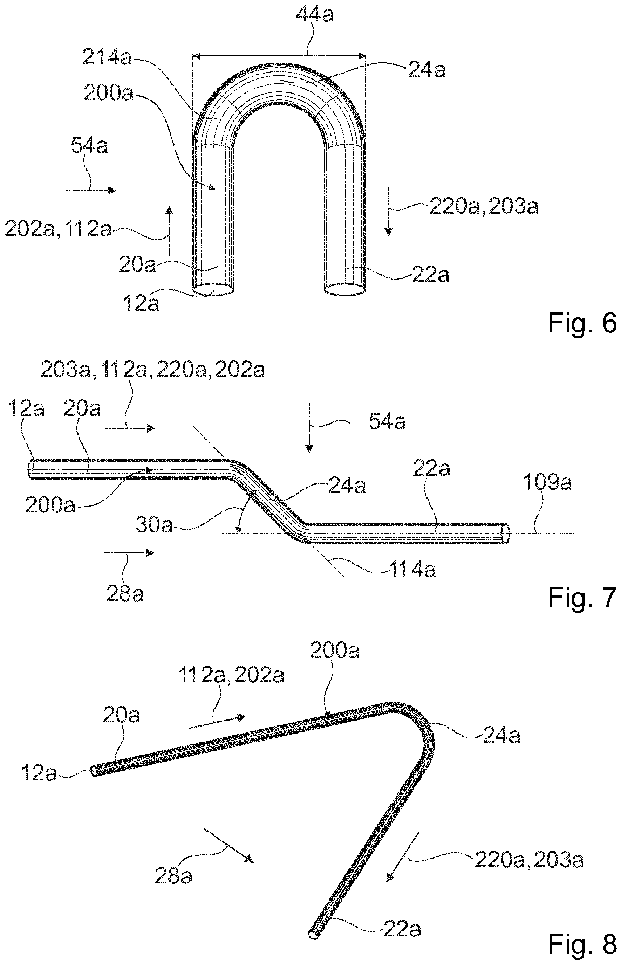

Die Figur 6 zeigt einen Teil der Wendel 12a in einer Längsbetrachtung, in einer schematischen Darstellung. Die Figur 7 zeigt einen Teil der Wendel 12a in einer Längsbetrachtung, in einer schematischen Darstellung. Die Figur 8 zeigt einen Teil der Wendel 12a in einer perspektivischen Darstellung. Der Draht 18a ist entlang eines Verlaufs des ersten Schenkels 20a und des zweiten Schenkels 22a zumindest im Wesentlichen in sich torsionsfrei gebogen. Ferner ist der Draht 18a entlang eines Verlaufs der Biegestelle 24a zumindest im Wesentlichen in sich torsionsfrei gebogen.

Der erste Schenkel 22a ist frei von einer Torsion. Insbesondere ist der erste Schenkel 22a in sich nicht verdreht. Der zweite Schenkel 22a ist frei von einer Torison. Insbesondere ist der zweite Schenkel 22a in sich nicht verdreht. Die Biegestelle 24a ist entlang ihres Verlaufs frei von einer Torsion. In der Querbetrachtung (vgl. Fig. 7) ist die Biegestelle 24a torsionsfrei. Es ist denkbar, dass eine Wendel torsionsfreie Schenkel aber eine zumindest leicht tordierte Biegestelle aufweist.

Der erste Schenkel 20a weist eine Oberflächenstruktur 200a auf, die eine Vorzugsrichtung 202a aufweist, welche sich parallel zu der Haupterstreckungsrichtung 112a des ersten Schenkels 20a erstreckt. Die Oberflächenstruktur 200a des ersten Schenkels 20a ist frei von bezüglich der Haupterstreckungsrichtung 112a des ersten Schenkels 20a spiralartig oder helikal verlaufenden Teilstrukturen.

Die Oberflächenstruktur 200a erstreckt sich über die Biegestelle 24a. Die Oberflächenstruktur 200a erstreckt sich über den zweiten Schenkel 20a. Die Oberflächenstruktur 200a weist eine Vorzugsrichtung 203a auf, welche sich parallel zu einer Haupterstreckungsrichtung 220a des zweiten Schenkels 22a erstreckt. Die Oberflächenstruktur 200a des zweiten Schenkels 22a ist frei von spiralartig oder helikal verlaufenden Teilstrukturen.

Die Oberflächenstruktur 200a umfasst eine Vielzahl von Oberflächenstrukturelementen 214a, 216a, 218a von denen aus Gründen einer Übersichtlichkeit nicht alle mit Bezugszeichen versehen sind. Die Oberflächenstrukturelemente 214a, 216a, 218a sind als Erhebungen auf einer Oberfläche des Drahts 18a ausgebildet, insbesondere als Erhebungen im Mikrometerbereich. Die Oberflächenstrukturelemente 214a, 216a, 218a sind Teil eines Oberflächengefüges des Drahts 18a. Die Oberflächenstrukturelemente 214a, 216a, 218a weisen zumindest im Wesentlichen gerade Verläufe entlang des ersten Schenkels 20a auf. Ferner erstrecken sich die Oberflächenstrukturelemente 214a, 216a, 218a in einem Bereich der Biegestelle 24a parallel zu dem Verlauf der Biegestelle 24a. Zudem weisen die Oberflächenstrukturelemente 214a, 216a, 218a zumindest im Wesentlichen gerade Verläufe entlang des zweiten Schenkels 22a auf. Die Oberflächenstrukturelemente 214a, 216a, 218a verlaufen entlang des ersten Schenkels 20a jeweils in einer Ebene. Die Oberflächenstrukturelemente 214a, 216a, 218a verlaufen entlang des zweiten Schenkels 22a jeweils in einer Ebene. Die Oberflächenstrukturelemente 214a, 216a, 218a verlaufen entlang der Biegestelle 24a jeweils in einer Ebene. Die Oberflächenstrukturelemente 214a, 216a, 218a verlaufen im Mittel entlang der Vorzugsrichtung 202a, 203a der Oberflächenstruktur 200a. Die Vorzugsrichtung 202a, 203a der Oberflächenstruktur 200a folgt einem Verlauf der Wendel 12a.

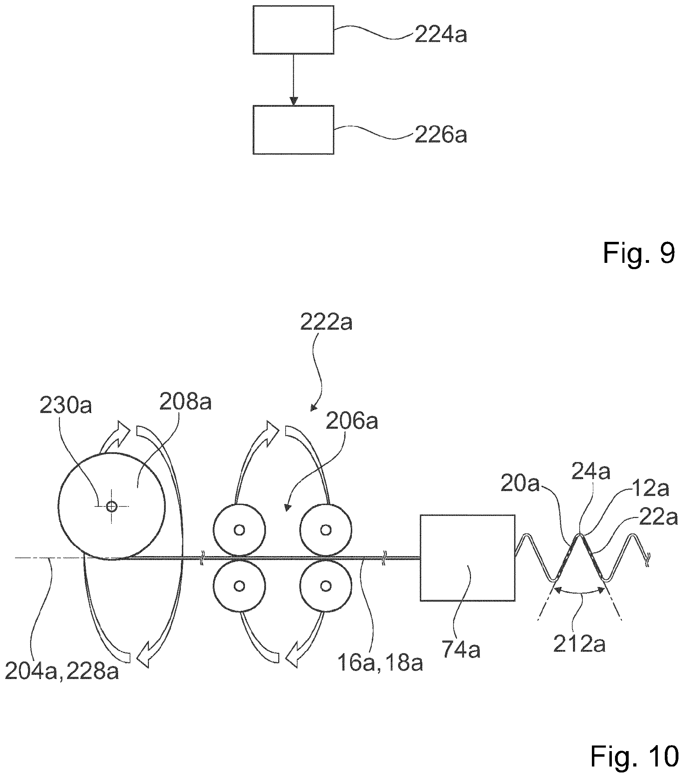

Die Figur 9 zeigt ein schematisches Ablaufdiagramm eines Verfahrens zur Herstellung des Drahtgeflechts 10a. In einem ersten Verfahrensschritt 224a wird die Wendel 12a derart aus dem Draht 18a gefertigt, dass der Draht 18a entlang eines Verlaufs des ersten Schenkels 20a und des zweiten Schenkels 22a zumindest im Wesentlichen in sich torsionsfrei gebogen wird. In einem zweiten Verfahrensschritt 226a wird die Wendel 12a in ein Vorgeflecht des Drahtgeflechts 10a eingeflochten.

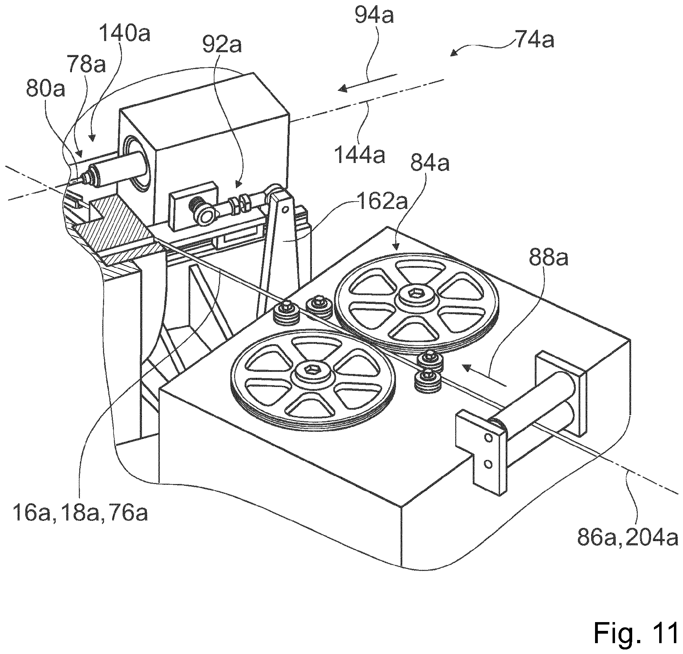

Die Figur 10 zeigt eine Herstellungsvorrichtung 222a zur Herstellung des Drahtgeflechts 10a. Die Herstellungsvorrichtung 222a ist dazu vorgesehen, das Drahtgeflecht 10a herzustellen. Die Herstellungsvorrichtung 222a weist eine Biegevorrichtung 74a auf. Das Längselement 16a beziehungsweise im vorliegenden Fall derer Draht 18a wird mittels der Biegevorrichtung 74a gebogen, welcher der Draht 18a zu einem Biegen zugeführt wird, wobei der Draht 18a bei einem Zuführen um dessen Längsachse 204a rotiert wird. Bezüglich einer Beschreibung der Biegevorrichtung 74a wird auf die Figuren 11 bis 13 verwiesen. Wird anstelle des Drahts 18a ein nicht als Einzeldraht ausgebildetes Längselement wie beispielsweise eine Litze und/oder ein Drahtbündel oder dergleichen verwendet, wird dieses analog zu dem Draht 18a verarbeitet und/oder geführt und/oder gebogen und/oder gerichtet etc. Im Folgenden wird jedoch der Fall beschrieben, dass das Längselement 16a als der Draht 18a ausgebildet ist.

Die Herstellungsvorrichtung 222a weist einen rotierenden Richtapparat 206a auf. Bei der Herstellung der Wendel 12a durchläuft der Draht 18a den rotierenden Richtapparat 206a. Der Richtapparat 206a ist um eine Rotationsachse 228a drehbar gelagert. Die Rotationsachse 228a entspricht der Längsachse 204a des Drahts 18a.

Die Herstellungsvorrichtung 222a weist eine mitrotierte Haspel 208a auf. Bei der Herstellung der Wendel 12a wird der Draht 18a von der mitrotierten Haspel 208a abgewickelt. Die mitrotierte Haspel 208a ist um die Rotationsachse 228a drehbar gelagert. Zu einem Abwickeln des Drahts 18a von der mitrotierten Haspel 208a wird die mitrotierte Haspel 208a um eine Abrollachse 230a gedreht, die senkrecht zu der Rotationsachse 228a angeordnet ist. Bei einem Rotieren der mitrotierten Haspel 208a um die Rotationsachse 228a rotiert die Abrollachse 230a um die Rotationsachse 228a.

Die Herstellungsvorrichtung 222a weist eine nicht gezeigte Antriebseinheit auf, die zu einem Rotieren der mitrotierten Haspel 208a sowie des Richtapparats 206a und somit der Drahts 18a um die Rotationsachse 228a vorgesehen ist. Im gezeigten Fall rotieren der Richtapparat 206a und die Haspel 208a um dieselbe Rotationsachse 228a. Es ist selbstverständlich auch denkbar, dass der Draht 18a zwischen der mitrotierten Haspel 208a und dem Richtapparat 206a um wenigstens eine Kurve geführt und der Richtapparat 206a um eine andere Rotationsachse rotiert wird als die Haspel 208a. Die Längsachse 204a des Drahts 18a verläuft in diesem Fall in einem Bereich der Haspel 208a anders als in einem Bereich des Richtapparats 206a.

Eine Torsion des Drahts 18a bei dem Biegen mittels der Biegevorrichtung 74a wird mittels einer Anpassung einer Rotationsgeschwindigkeit des Drahts 18a ausgeglichen.

Der Draht 18a wird für ein Biegen der Biegestelle 24a wenigstens um einen Ausgleichswinkel rotiert, der einem Winkel 212a zwischen dem ersten Schenkel 22a und dem zweiten Schenkel 22a in einer Frontalbetrachtung senkrecht zu einer Haupterstreckungsebene der Wendel 12a entspricht. Insbesondere addieren sich der erste Steigungswinkel 26a und eine Hälfte des Winkels 212a zwischen dem ersten Schenkel 20a und dem zweiten Schenkel 22a zu 90°. Bei dem Biegen des Drahts 18a mittels der Biegevorrichtung 74a wird je gebogener Biegestelle eine Torsion des Drahts 18a um den Betrag des Winkels 212a zwischen dem ersten Schenkel 20a und dem zweiten Schenkel 22a erzeugt. Diese erzeugte Torsion wird mittels Rotation des Drahts 18a um dessen Längsachse 204a ausgeglichen. Der Draht 18a wird dabei in eine Richtung rotiert, die einem Drehsinn der Wendel 12a entspricht.

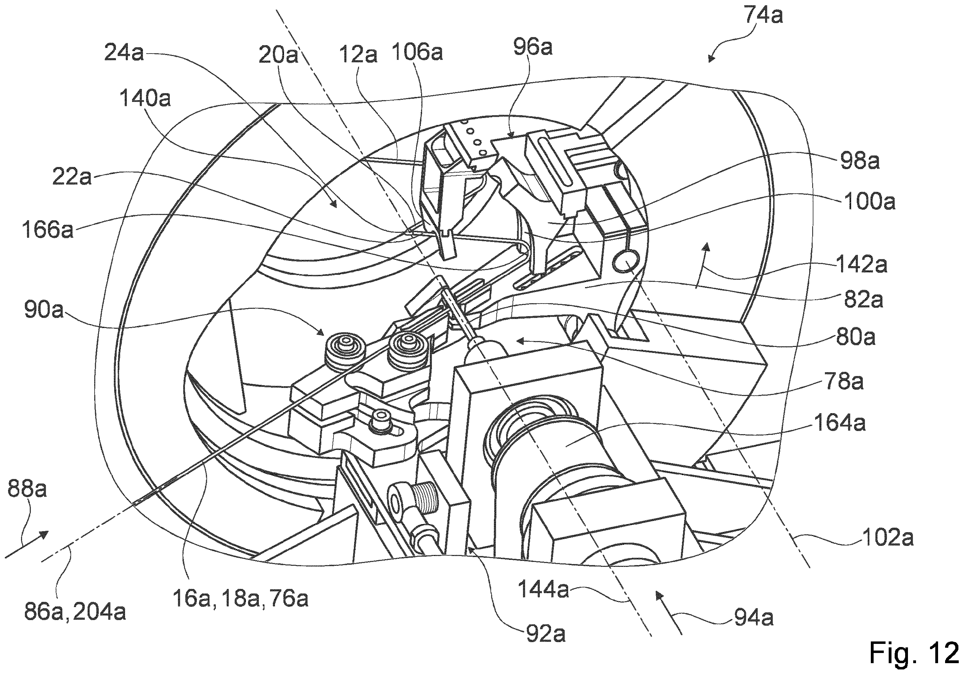

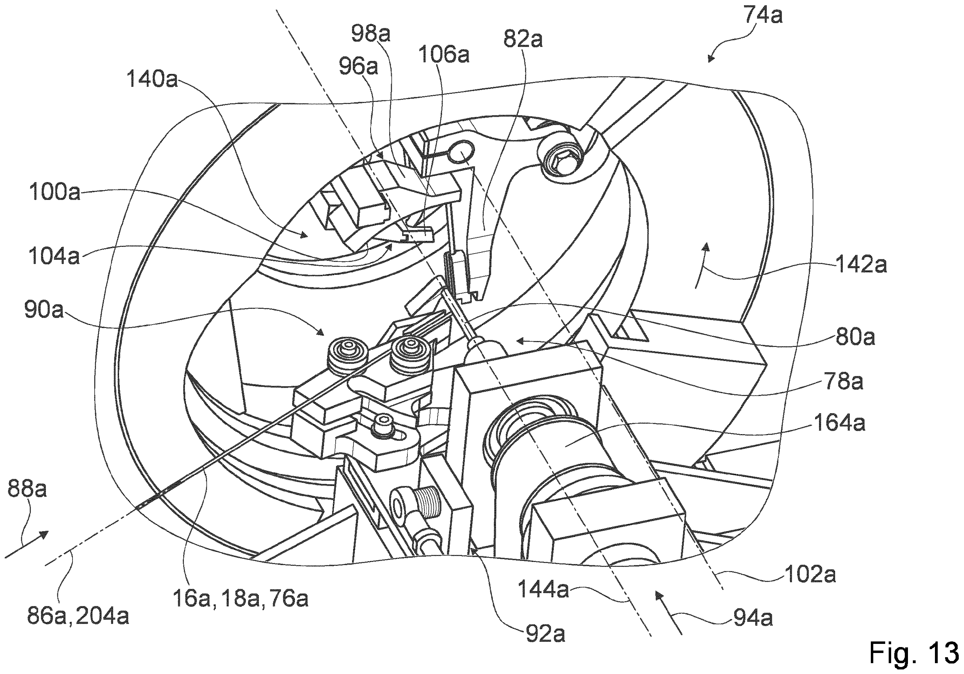

Die Figur 11 zeigt die Biegevorrichtung 74a der Herstellungsvorrichtung 222a in einer perspektivischen Darstellung. Die Figur 12 zeigt einen Biegeraum 140a der Biegevorrichtung 74a in einem ersten Betriebszustand in einer perspektivischen Darstellung. Die Figur 13 zeigt den Biegeraum 140a in einem zweiten Betriebszustand in einer perspektivischen Darstellung. Die Biegevorrichtung 74a ist dazu vorgesehen, die erste Wendel 12a herzustellen. Die Biegevorrichtung 74a ist zu einem Biegen der ersten Wendel 12a gemäß der Geometrie der ersten Wendel 12a, insbesondere der Schenkel 20a, 22a und der Biegestelle 24a der ersten Wendel 12a, vorgesehen. Die Biegevorrichtung 74a ist dazu vorgesehen, die erste Wendel 12a aus dem Draht 18a zu fertigen. Der Draht 18a bildet dabei in einem ungebogenen Zustand einen Wendelrohling 76a. Die Biegevorrichtung 74a ist dazu vorgesehen, die erste Wendel 12a mittels eines Biegens des Wendelrohlings 76a zu fertigen.

Die Biegevorrichtung 74a weist eine Biegeeinheit 78a auf. Die Biegeeinheit 78a umfasst einen Biegedorn 80a sowie einen Biegetisch 82a. Der Biegetisch 82a ist zu einem Biegen des Wendelrohlings 76a um den Biegedorn 80a vorgesehen. Der Biegetisch 82a ist vollständig um den Biegedorn 80a umlaufend gelagert. Bei einer Fertigung läuft der Biegetisch 82a kontinuierlich in eine Umlaufrichtung 142a um den Biegedorn 80a. Der Biegedorn 80a weist eine Längsachse 144a auf. Die Längsachse 144a des Biegedorns 80a verläuft parallel zu einer Haupterstreckungsrichtung 94a des Biegedorns 80a.

Die Biegevorrichtung 74a weist eine Vorschubeinheit 84a auf, die zu einem Vorschieben des Wendelrohlings 76a entlang einer Vorschubachse 86a in eine Vorschubrichtung 88a vorgesehen ist. Die Vorschubachse 86a ist parallel zu der Vorschubrichtung 88a angeordnet. Die Vorschubrichtung 88a verläuft parallel zu einer Haupterstreckungsrichtung des Wendelrohlings 76a. Die Vorschubachse 86a schließt mit der Längsachse 144a des Biegedorns 80a einen Winkel ein, der zumindest im Wesentlichen und insbesondere genau dem ersten Steigungswinkel 26a entspricht. Der erste Steigungswinkel 26a kann mittels eines Verstellens der Vorschubachse 86a relativ zu der Längsachse 144a des Biegedorns 80a eingestellt werden.

Bei der Fertigung wird der Wendelrohling 76a wiederholt vorgeschoben. Die Biegeeinheit 78a, insbesondere der Biegetisch 82a, biegt nach erfolgtem Vorschub den Wendelrohling 76a jeweils um den Biegedorn 80a, um eine Biegestelle der gefertigten ersten Wendel 12a zu erzeugen. Die Vorschubeinheit 84a gibt während des Biegens den Wendelrohling 76a frei, sodass dieser sich aufgrund der Rotation des Drahts 18a um die Längsachse 204a des Drahts 18a drehen kann. Es ist dabei denkbar, dass der Draht 18a um wenigstens eine Kurve geführt wird und seine Längsachse 204a in einem Bereich der Vorschubeinheit 84a und/oder in einem Bereich des Biegeraums 140a von der Rotationsachse 228a der mitrotierten Haspel 208a und/oder des Richtapparats 206a verschieden ist. Ein Durchmesser des Biegedorns 80a definiert dabei eine Biegekrümmung der Biegestelle 24a. Insbesondere definiert der Durchmesser des Biegedorns 80a einen Innenradius der Biegestelle 24a.

Die Biegevorrichtung 74a weist eine Anschlagseinheit 96a mit zumindest einem Anschlagselement 98a auf, das eine maximale Vorschubposition für den Wendelrohling 76a definiert. Bei einem Vorschieben kann der Wendelrohling 76a von der Vorschubeinheit 84a maximal bis zu der maximalen Vorschubposition vorgeschoben werden. Der Wendelrohling 76a befindet sich vor dem Biegen durch den Biegetisch 82a um den Biegedorn 80a in der maximalen Vorschubposition. In der maximalen Vorschubposition stößt der Wendelrohling 76a mit einer zuletzt gebogenen Biegestelle 166a der ersten Wendel 12a an dem Anschlagselement 98a an. Der in der Figur 12 dargestellte erste Betriebszustand entspricht einer Situation unmittelbar vor dem Biegen des Wendelrohlings 76a um den Biegedorn 80a. Der Wendelrohling 76a befindet sich in dem ersten Betriebszustand in der maximalen Vorschubposition. Der in der Figur 13 dargestellte zweite Betriebszustand entspricht einer Situation während des Biegens der Wendelrohlings 76a um den Biegedorn 80a. Der Biegetisch 82a ist in dem zweiten Betriebszustand entlang der Umlaufrichtung 142a gegenüber seiner Position in dem ersten Betriebszustand verschoben.

Das Anschlagselement 98a ist vollständig um den Biegedorn 80a umlaufend gelagert. Das Anschlagselement 98a läuft bei der Fertigung kontinuierlich um den Biegedorn 80a in die Umlaufrichtung 142a.

Der Biegetisch 82a ist um eine Schwenkachse 102a schwenkbar gelagert, welche bei dem Umlaufen des Biegetischs 82a um den Biegedorn 80a selbst den Biegedorn 80a umläuft, insbesondere in die Umlaufrichtung 142a. Die Schwenkachse 102a bewegt sich bei der Fertigung auf einer Kreisbahn. Die Schwenkachse 102a bewegt sich bei der Fertigung mit einer konstanten Winkelgeschwindigkeit. Während des Biegens laufen der Biegetisch 82a und das Anschlagselement 98a mit gleicher Geschwindigkeit um den Biegedorn 80a. Nach dem Biegen schwenkt der Biegetisch 82a um die Schwenkachse 102a aus, wodurch ein maximaler Biegewinkel definiert ist. Der Biegetisch 82a schwenkt anschließend, insbesondere während des Vorschiebens des Wendelrohlings 76a, wieder um die Schwenkachse 102a zurück. In dem ersten Betriebszustand liegt das Anschlagselement 98a auf dem Biegetisch 82a auf.

Im vorliegenden Fall ist der Biegedorn 80a angetrieben. Der Biegedorn 80a ist um seine Längsachse 144a drehbar gelagert. Der Biegedorn 80a ist über einen Riemen 164a mit einer nicht gezeigten Antriebseinheit gekoppelt, welche insbesondere ferner den Biegetisch 82a antreibt. Der Biegedorn 80a ist auswechselbar ausgebildet. Die Biegeeinheit 78a ist mit Biegedornen mit unterschiedlichen Durchmessern bestückbar.

Eine Position des Biegetischs 82a relativ zu dem Anschlagselement 98a ist bei dem Umlaufen des Biegetischs 82a um den Biegedorn 80a veränderlich.

Das Anschlagselement 98a weist eine konkav gekrümmte Anschlagsfläche 100a auf. Die Anschlagsfläche 100a ist in der Umlaufrichtung 142a entsprechend kreisbogenförmig gekrümmt. Ferner ist die Anschlagsfläche 100a senkrecht zu der Krümmung in Umlaufrichtung 142a kreisbogenförmig gekrümmt. Ein Radius dieser Krümmung senkrecht zur Umlaufrichtung 142a entspricht zumindest im Wesentlichen einer Krümmung der Biegestelle 24a. In der maximalen Vorschubposition liegt die zuletzt gebogene Biegestelle 166a an der Anschlagsfläche 100a an, welche sich kreisbogenförmig um die zuletzt gebogene Biegestelle 166a krümmt.

In einem Vorschubbetriebszustand, in welchem der Vorschub des Wendelrohlings 76a erfolgt, ist eine Position des Anschlagselements 98a relativ zu der Vorschubachse 86a veränderlich. Das Anschlagselement 98a bewegt sich in dem Vorschubbetriebszustand, insbesondere nachdem der Wendelrohling 76a an dem Anschlagselement 98a anliegt, sich demnach insbesondere in der maximalen Vorschubposition befindet, an der zuletzt gebogenen Biegestelle 166a in Umlaufrichtung 142a entlang.

Die Biegeeinheit 78a ist zu einem Biegen eines Wendelrohlings mit zumindest einem Draht aus einem hochfesten Stahl vorgesehen. Im vorliegenden Fall kann der Wendelrohling 76a mittels der Biegeeinheit 78a gebogen werden.

Die Biegeeinheit 78a ist dazu vorgesehen, den Wendelrohling 76a bei einem einzelnen Umlauf, insbesondere bei jedem Umlauf, des Biegetischs 82a um den Biegedorn 80a um mehr als 180° zu biegen. Ein Biegewinkel wird dabei durch einen Zeitpunkt eines Verschwenkens des Biegetischs 82a um die Schwenkachse 102a definiert. Die Biegeeinheit 78a ist zu einem Überbiegen des Wendelrohlings 76a vorgesehen, insbesondere um ein Rückfedern des Wendelrohlings 76a nach dem Biegen aufgrund dessen hoher Biegesteifigkeit auszugleichen. Die Biegeeinheit 78a ist dazu vorgesehen, die Biegestelle 24a mit einem Gesamtwinkel von genau 180° zu versehen, sodass die erste Wendel 12a in sich gerade verlaufend gefertigt werden kann.

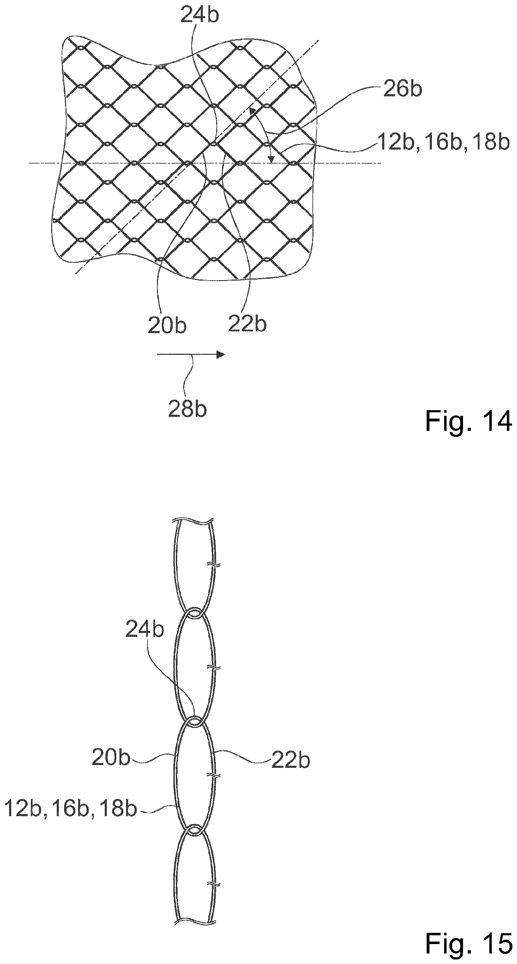

In den Figuren 14 und 15 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 13, verwiesen werden kann. Zur Unterscheidung der Ausführungsbeispiele ist der Buchstabe a den Bezugszeichen des Ausführungsbeispiels in den Figuren 1 bis 13 nachgestellt. In dem Ausführungsbeispiel der Figuren 14 und 15 ist der Buchstabe a durch den Buchstaben b ersetzt.

Die Figur 14 zeigt einen Teil eines Drahtgeflechts 10b mit mehreren ineinander geflochtenen Wendeln 12b, von denen wenigstens eine Wendel 12b aus zumindest einem Längselement 16b gebogen ist und zumindest einen ersten Schenkel 20b, einen zweiten Schenkel 22b sowie zumindest eine den ersten Schenkel 20b und den zweiten Schenkel 22b miteinander verbindende Biegestelle 24b umfasst. Das Längselement 16b ist entlang eines Verlaufs des ersten Schenkels 20b und des zweiten Schenkels 22b zumindest im Wesentlichen in sich torsionsfrei gebogen. Insbesondere entspricht ein Torsionszustand des Längselements 16b in dem Drahtgeflecht 12b einem Torsionszustand eines Rohlings des Längselements 16b vor dessen Verarbeitung zu dem Drahtgeflecht 12b. Im vorliegenden Fall ist das Längselement 16b als eine Drahtlitze ausgebildet. Das Längselement 16b weist zumindest einen Draht 18b aus einem hochfesten Stahl auf. Im vorliegenden Fall ist das Längselement 16b aus einer Mehrzahl identischer Drähte 18b gefertigt, die in den Figuren nicht einzeln dargestellt sind. In einer Frontalbetrachtung senkrecht zu einer Haupterstreckungsebene der Wendel 12b verläuft der erste Schenkel 20b mit einem ersten Steigungswinkel 26b bezüglich der Längsrichtung 28b der Wendel 12b. Im vorliegenden Fall beträgt der erste Steigungswinkel 26b etwa 45°. Das Drahtgeflecht 10b weist im vorliegenden Fall quadratische Maschen auf.

Die Figur 15 zeigt einen Teil des Drahtgeflechts 10b in einer Längsbetrachtung entlang einer Längsrichtung 28b der Wendel 12b (vgl. Fig. 14). Der erste Schenkel 20b und der zweite Schenkel 22b weisen einen gekrümmten Verlauf auf. Das Drahtgeflecht 10b weist bauchige Maschen auf, wodurch insbesondere ein Einschlag von Gegenständen quer zu dem Drahtgeflecht 10b gedämpft werden kann.

Die Wendel 12b ist mittels einer nicht gezeigten konventionellen Flechtmaschine mit einem Flechtmesser hergestellt. Das Längselement 16b wird bei der Herstellung der Wendel 12b um dessen Längsachse rotiert, um eine bei dem Biegen des Längselement 16b mittels des Flechtmessers auftretende Torsion auszugleichen.

### Bezugszeichen

- 10: Drahtgeflecht
- 12: Wendel
- 14: Wendel
- 16: Längselement
- 18: Draht
- 20: Schenkel
- 22: Schenkel
- 24: Biegestelle
- 26: Steigungswinkel
- 28: Längsrichtung
- 30: Steigungswinkel
- 32: Biegestelle
- 54: Frontalrichtung
- 74: Biegevorrichtung
- 76: Wendelrohling
- 78: Biegeeinheit
- 80: Biegedorn
- 82: Biegetisch
- 84: Vorschubeinheit
- 86: Vorschubachse
- 88: Vorschubrichtung
- 94: Haupterstreckungsrichtung
- 96: Anschlagseinheit
- 98: Anschlagselement
- 100: Anschlagsfläche
- 102: Schwenkachse
- 109: Längsachse
- 110: Längsachse
- 112: Haupterstreckungsrichtung
- 114: Längsachse
- 118: Kreuzungswinkel
- 140: Biegeraum
- 142: Umlaufrichtung
- 144: Längsachse
- 164: Riemen
- 166: Biegestelle
- 200: Oberflächenstruktur
- 202: Vorzugsrichtung
- 203: Vorzugsrichtung
- 204: Längsachse
- 206: Richtapparat
- 208: Haspel
- 212: Winkel
- 214: Oberflächenstrukturelement
- 216: Oberflächenstrukturelement
- 218: Oberflächenstrukturelement
- 220: Haupterstreckungsrichtung
- 222: Herstellungsvorrichtung
- 224: Verfahrensschritt
- 226: Verfahrensschritt
- 228: Rotationsachse
- 230: Abrollachse

## Patentansprüche

1. Drahtgeflecht (10a; 10b), insbesondere Sicherheitsnetz, mit mehreren ineinander geflochtenen Wendeln (12a, 14a; 12b), von denen wenigstens eine Wendel (12a, 14a; 12b) aus zumindest einem Einzeldraht, einem Drahtbündel, einer Drahtlitze, einem Drahtseil und/oder einem anderen Längselement (16a; 16b) mit zumindest einem, insbesondere einen hochfesten Stahl aufweisenden, Draht (18a; 18b) gebogen ist und zumindest einen ersten Schenkel (20a; 20b), zumindest einen zweiten Schenkel (22a; 22b) sowie zumindest eine den ersten Schenkel (20a; 20b) und den zweiten Schenkel (22a; 22b) miteinander verbindende Biegestelle (24a; 24b) umfasst, **dadurch gekennzeichnet, dass** das Längselement (16a; 16b) entlang eines Verlaufs des ersten Schenkels (20a; 20b) und/oder des zweiten Schenkels (22a; 22b) zumindest im Wesentlichen in sich torsionsfrei gebogen ist.

2. Drahtgeflecht (10a; 10b) nach Anspruch 1, **dadurch gekennzeichnet, dass** das Längselement (16a; 16b) entlang eines Verlaufs der Biegestelle (24a; 24b) zumindest im Wesentlichen in sich torsionsfrei gebogen ist.

3. Drahtgeflecht (10a) nach Anspruch 1 oder 2, **dadurch gekennzeichnet, dass** eine Oberflächenstruktur (200a) des ersten Schenkels (20a) und/oder des zweiten Schenkels (22a) eine Vorzugsrichtung (202a) aufweist, die sich parallel zu einer Haupterstreckungsrichtung (112a) des ersten Schenkels (20a) und/oder des zweiten Schenkels (22a) erstreckt.

4. Drahtgeflecht (10a) nach Anspruch 3, **dadurch gekennzeichnet, dass** die Oberflächenstruktur (200a) des ersten Schenkels (20a) und/oder des zweiten Schenkels (22a) frei von bezüglich der Haupterstreckungsrichtung (112a) des ersten Schenkels (20a) und/oder des zweiten Schenkels (22a) spiralartig verlaufenden Teilstrukturen ist.

5. Drahtgeflecht (10a) nach einem der vorhergehenden Ansprüche, **dadurch gekennzeichnet, dass** in einer Querbetrachtung parallel zu einer Haupterstreckungsebene der Wendel (12a) und senkrecht zu einer Längsrichtung (28a) der Wendel (12a) die Biegestelle (24a) zumindest abschnittsweise einem zumindest annähernd geraden Verlauf folgt.

6. Drahtgeflecht (10a) nach Anspruch 5, **dadurch gekennzeichnet, dass** in der Querbetrachtung die Wendel (12a) zumindest abschnittsweise einem stufigen Verlauf folgt.

7. Drahtgeflecht (10a) nach einem der vorhergehenden Ansprüche, **dadurch gekennzeichnet, dass** der erste Schenkel (20a) und/oder der zweite Schenkel (22a) zumindest abschnittsweise einem geraden Verlauf folgt.

8. Drahtgeflecht (10a) nach einem der vorhergehenden Ansprüche, **dadurch gekennzeichnet, dass** der erste Schenkel (20a) zumindest abschnittsweise in einer ersten Ebene und der zweite Schenkel (22a) zumindest abschnittsweise in einer zu der ersten Ebene parallelen zweiten Ebene verlaufen.

9. Drahtgeflecht (10a; 10b) nach einem der vorhergehenden Ansprüche, **dadurch gekennzeichnet, dass** der Draht (18a; 18b) einen hochfesten Stahl und/oder eine Zugfestigkeit von wenigstens 800 N mm⁻² aufweist.

10. Verfahren zur Herstellung einer Wendel (12a) für ein Drahtgeflecht (10a), insbesondere für ein Sicherheitsnetz, insbesondere nach einem der vorhergehenden Ansprüche, wobei die Wendel (12a) aus zumindest einem Einzeldraht, einem Drahtbündel, einer Drahtlitze, einem Drahtseil und/oder einem anderen Längselement (16a; 16b) mit zumindest einem, insbesondere einen hochfesten Stahl aufweisenden, Draht (18a; 18b)derart gebogen wird, dass sie zumindest einen ersten Schenkel (20a), zumindest einen zweiten Schenkel (22a) sowie zumindest eine den ersten Schenkel (20a) und den zweiten Schenkel (22a) miteinander verbindende Biegestelle (24a) umfasst, **dadurch gekennzeichnet, dass** das Längselement (16a; 16b) entlang eines Verlaufs des ersten Schenkels (20a) und/oder des zweiten Schenkels (22a) zumindest im Wesentlichen in sich torsionsfrei gebogen wird, wobei das Längselement (16a) mittels einer Biegevorrichtung (74a) gebogen wird, welcher das Längselement (16a) zu einem Biegen zugeführt wird, und wobei das Längselement (16a) bei einem Zuführen um seine Längsachse (204a) rotiert wird.

11. Verfahren nach Anspruch 10, **dadurch gekennzeichnet, dass** das Längselement (16a) einen rotierenden Richtapparat (206a) durchläuft.

12. Verfahren nach Anspruch 10 oder 11, **dadurch gekennzeichnet, dass** das Längselement (16a) von einer mitrotierten Haspel (208a) abgewickelt wird.

13. Verfahren nach einem der Ansprüche 10 bis 12, **dadurch gekennzeichnet, dass** mittels zumindest einer Anpassung einer Rotationsgeschwindigkeit des Längselements (16a) eine Torsion des Längselements (16a) bei dem Biegen mittels der Biegevorrichtung (74a) ausgeglichen wird.

14. Verfahren nach Anspruch 13, **dadurch gekennzeichnet, dass** das Längselement (16a) für ein Biegen der Biegestelle (24a) wenigstens um einen Ausgleichswinkel rotiert wird, der einem Winkel (212a) zwischen dem ersten Schenkel (20a) und dem zweiten Schenkel (22a) in einer Frontalbetrachtung senkrecht zu einer Haupterstreckungsebene der Wendel (12a) entspricht.

## Claims

1. Wire netting (10a; 10b), in particular a safety net, with a plurality of helices (12a, 14a; 12b) which are braided with each other, of which at least one helix (12a, 14a; 12b) is bent from at least one single wire, a wire bundle, a wire strand, a wire rope and/or another longitudinal element (16a; 16b) with at least one wire (18a; 18b), which in particular comprises a high-tensile steel, the at least one helix (12a, 14a; 12b) having at least one first leg (20a; 20b), at least one second leg (22a; 22b) as well as at least one bending region (24a; 24b) connecting the first leg (20a; 20b) and the second leg (22a; 22b) to each other, **characterised in that** the longitudinal element (16a; 16b) is bent at least substantially torsion-free in itself along a contour of the first leg (20a; 20b) and/or of the second leg (22a; 22b).

2. Wire netting (10a; 10b) according to claim 1, **characterised in that** the longitudinal element (16a; 16b) is bent, at least substantially without any torsion in itself, along a contour of the bending region (24a; 24b).

3. Wire netting (10a) according to claim 1 or 2, **characterised in that** a surface structure (200a) of the first leg (20a) and/or of the second leg (22a) has a preferential direction (202a) which extends parallel to a main extension direction (112a) of the first leg (20a) and/or of the second leg (22a).

4. Wire netting (10a) according to claim 3, **characterised in that** the surface structure (200a) of the first leg (20a) and/or of the second leg (22a) is free from partial structures extending spirally with respect to the main extension direction (112a) of the first leg (20a) and/or of the second leg (22a).

5. Wire netting (10a) according to one of the preceding claims, **characterised in that,** in a transverse view parallel to a main extension plane of the helix (12a) and perpendicularly to a longitudinal direction (28a) of the helix (12a), the bending region (24a) at least section-wise follows an at least approximately straight course.

6. Wire netting (10a) according to claim 5, **characterised in that,** in the transverse view, the helix (12a) follows at least section-wise a stepped contour.

7. Wire netting (10a) according to one of the preceding claims, **characterised in that** the first leg (20a) and/or the second leg (22a) at least section-wise follow/follows a straight contour.

8. Wire netting (10a) according to one of the preceding claims, **characterised in that** the first leg (20a) runs at least section-wise in a first plane and the second leg (22a) extends at least section-wise in a second plane that is parallel to the first plane.

9. Wire netting (10a; 10b) according to one of the preceding claims, **characterised in that** the wire (18a; 18b) comprises a high-tensile steel and/or has a tensile strength of at least 800 N mm⁻².

10. Method for manufacturing a helix (12a) for a wire netting (10a), in particular for a safety net, in particular according to any one of the preceding claims, wherein the helix (12a) is bent from at least one single wire, a wire bundle, a wire strand, a wire rope and/or another longitudinal element (16a; 16b) with at least one wire (18a; 18b), which in particular comprises a high-tensile steel, in such a way that it comprises at least one first leg (20a), at least one second leg (22a) as well as at least one bending region (24a) connecting the first leg (20a) and the second leg (22a) to each other, **characterised in that** the longitudinal element (16a; 16b) is bent, at least substantially without any torsion in itself, along a contour of the first leg (20a) and/or of the second leg (22a), wherein the longitudinal element (16a) is bent by means of a bending device (74a), which the longitudinal element (16a) is supplied to for bending, and wherein during conveyance the longitudinal element (16a) is rotated about its longitudinal axis (204a).

11. Method according to claim 10, **characterised in that** the longitudinal element (16a) passes through a rotating orienting apparatus (206a).

12. Method according to claim 10 or 11, **characterised in that** the longitudinal element (16a) is unwound from a co-rotated reel (208a).

13. Method according to one of claims 10 to 12, **characterised in that,** by at least one adjustment of a rotation speed of the longitudinal element (16a), a torsion of the longitudinal element (16a) is compensated by the bending device (74a) during a bending.

14. Method according to claim 13, **characterised in that,** for a bending of the bending region (24a), the longitudinal element (16a) is rotated at least by a compensating angle, which corresponds to an angle (212a) between the first leg (20a) and the second leg (22a) in a front view perpendicular to a main extension plane of the helix (12a).

## Revendications

1. Grillage en fil (10a ; 10b), en particulier filet de sauvegarde, ayant une pluralité d'hélices (12a, 14a ; 12b), qui sont tressées les unes avec les autres, dont au moins une hélice (12a, 14a ; 12b) est courbée à partir d'au moins un fil unique, un faisceau de fils, un cordon de fils, un câble de fils et/ou un autre élément longitudinal (16a ; 16b), ayant au moins un fil (18a ; 18b), qui comprend en particulier un acier à grande résistance,
l'au moins une hélice (12a, 14a ; 12b) ayant au moins un premier côté (20a ; 20b), au moins un deuxième côté (22a ; 22b) ainsi qu'au moins une zone de courbure (24a ; 24b) reliant le premier côté (20a ; 20b) et le deuxième côté (22a ; 22b) l'un à l'autre,
**caractérisé en ce que**
l'élément longitudinal (16a ; 16b) est courbé, au moins sensiblement sans torsion en lui-même, le long d'un contour du premier côté (20a ; 20b) et/ou du deuxième côté (22a ; 22b).

2. Grillage en fil (10a ; 10b) selon la revendication 1, **caractérisé en ce que** l'élément longitudinal (16a ; 16b) est courbé au moins sensiblement sans torsion en lui-même le long d'un contour de la zone de courbure (24a ; 24b).

3. Grillage en fil (10a) selon l'une quelconque des revendications 1 ou 2, **caractérisé en ce qu'**une structure de superficie (200a) du premier côté (20a) et/ou du deuxième côté (22a) présente une direction préférentielle (202a), qui s'étend parallèlement à une direction d'étendue principale (112a) du premier côté (20a) et/ou du deuxième côté (22a).

4. Grillage en fil (10a) selon la revendication 3, **caractérisé en ce que** la structure de superficie (200a) du premier côté (20a) et/ou du deuxième côté (22a) est sans structure partielle s'étendant en spirale par rapport à la direction d'étendue principale (112a) du premier côté (20a) et/ou du deuxième côté (22a).

5. Grillage en fil (10a) selon l'une quelconque des revendications précédentes, **caractérisé en ce que**, dans une vue transversale, parallèlement à un plan d'étendue principale de l'hélice (12a) et perpendiculairement à une direction longitudinale (28a) de l'hélice (12a), la zone de courbure (24a) suit, au moins par section(s), au moins à peu près, un contour droit.

6. Grillage en fil (10a) selon la revendication 5, **caractérisé en ce que**, dans la vue transversale, l'hélice (12a) suit, au moins par section(s), un contour en échelon.

7. Grillage en fil (10a) selon l'une quelconque des revendications précédentes, **caractérisé en ce que** le côté premier (20a) et/ou le côté deuxième (22a) suit, au moins par section(s), un contour droit.

8. Grillage en fil (10a) selon l'une quelconque des revendications précédentes, **caractérisé en ce que** le côté premier (20a) s'étend, au moins par section(s), dans un premier plan, et le côté deuxième (22a) s'étend, au moins par section(s), dans un deuxième plan, qui est parallèle au premier plan.

9. Grillage en fil (10a ; 10b selon l'une quelconque des revendications précédentes, **caractérisé en ce que** le fil (18a ; 18b) comprend un acier à grande résistance et/ou présente une résistance à la traction d'au moins 800 N mm⁻².

10. Procédé de fabrication d'une hélice (12a) pour un grillage en fil (10a), en particulier pour un filet de sauvegarde, en particulier selon l'une quelconque des revendications précédentes, dans lequel l'hélice est courbée à partir d'au moins un fil unique, un faisceau de fils, un cordon de fils, un câble de fils et/ou un autre élément longitudinal (16a ; 16b), ayant au moins un fil (18a ; 18b), qui comprend en particulier un acier à grande résistance, de façon qu'elle comprenne au moins un premier côté (20a), au moins un deuxième côté (22a) ainsi qu'au moins une zone de courbure (24a) reliant le premier côté (20a) et le deuxième côté (22a) l'un à l'autre, **caractérisé en ce que** l'élément longitudinal (16a ; 16b) est courbé, au moins sensiblement sans torsion en lui-même, le long d'un contour du premier côté (20a) et/ou du deuxième côté (22a),
l'élément longitudinal (16a) étant courbé par le biais d'un dispositif de courbure (74a), auquel l'élément longitudinal (16a) est alimenté pour être courbé, et l'élément longitudinal (16a) étant mis en rotation autour de son axe longitudinal (204a) pendant l'alimentation.

11. Procédé selon la revendication 10, **caractérisé en ce que** l'élément longitudinal (16a) passe par un appareil d'orientation (206a) tournante.

12. Procédé selon la revendication 10 ou 11, **caractérisé en ce que** l'élément longitudinal (16a) est déroulé d'une bobine (208a) en co-rotation.

13. Procédé selon l'une quelconque des revendications 10 à 12, **caractérisé en ce que**, par au moins un réglage d'une vitesse de rotation de l'élément longitudinal (16a), une torsion de l'élément longitudinal (16a) est compensée par le dispositif de courbure (74a) pendant la courbure.

14. Procédé selon la revendication 13, **caractérisé en ce que**, pour courber la zone de courbure (24a), l'élément longitudinal (16a) est fait tourner au moins d'un angle de compensation, qui correspond à un angle (212a) entre le premier côté (20a) et le deuxième côté (22a) dans une vue de face perpendiculairement à un plan d'étendue principal de l'hélice (12a).
